(19) Europäisches Patentamt
European Patent Office
Office européen des brevets

(11) EP 2 048 191 A1

(12) EUROPEAN PATENT APPLICATION
published in accordance with Art. 153(4) EPC

(43) Date of publication:
**15.04.2009 Bulletin 2009/16**

(21) Application number: **07768333.2**

(22) Date of filing: **06.07.2007**

(51) Int Cl.:
***C08L 7/00*** *(2006.01)* ***B60C 1/00*** *(2006.01)*
***C08F 8/42*** *(2006.01)* ***C08J 9/06*** *(2006.01)*
***C08K 7/02*** *(2006.01)* ***C08K 7/16*** *(2006.01)*
***C08L 15/00*** *(2006.01)*

(86) International application number:
**PCT/JP2007/063608**

(87) International publication number:
**WO 2008/004676 (10.01.2008 Gazette 2008/02)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **06.07.2006 JP 2006186775**

(71) Applicant: **Bridgestone Corporation**
**Tokyo 104-8340 (JP)**

(72) Inventor: **OTA, Toshiyuki**
**Kodaira-shi**
**Tokyo 187-8531 (JP)**

(74) Representative: **Whalley, Kevin**
**Marks & Clerk**
**90 Long Acre**
**London WC2E 9RA (GB)**

# (54) RUBBER COMPOSITION AND PNEUMATIC TIRE USING THE SAME

(57) Provide are a rubber composition which enhances a reinforcing property with a filler and maintains a DRY performance and which has an excellent on-ice performance and a pneumatic tire prepared by using the above rubber composition for a tread. The rubber composition is **characterized by** having independent air bubbles and comprising (A) a rubber component comprising a natural rubber and an end-modified conjugated diene base polymer, (B) a fine particle-containing organic fiber and (C) a filler.

EP 2 048 191 A1

**Description**

BACKGROUND OF THE INVENTION

The present invention relates to a rubber composition and a pneumatic tire prepared by using the same, more specifically to a rubber composition which enhances a reinforcing property with a filler and maintains a braking and driving performance (DRY performance) on a dry road surface and which has an excellent braking and driving performance (on-ice performance) of a tire on an ice road surface and a pneumatic tire prepared by using the above rubber composition for a tread.

RELATED ART

Since spike tires were prohibited, researches particularly on treads of tires have actively been carried out in order to enhance a braking and driving performance (hereinafter referred to as an on-ice performance) of a tire on an ice road surface. A water film is liable to be formed on an ice road surface due to frictional heat generated by the ice road surface and the tire, and the water film reduces a friction coefficient between the tire and the ice road surface. This requires treads of tires to be improved in a water film-removing performance, an edge effect and a spike effect in order to enhance an on-ice performance of tires.
In order to provide treads of tires with a water film-removing performance, a large number of micro drainage grooves (both depth and width: about 100 μm) are provided on a surface of a tire brought into contact with a road to remove a water film by the above drainage grooves, whereby a friction coefficient of the tire on an ice road surface is increased. In the above case, however, involved therein is the problem that though an on-ice performance of the tires can be enhanced in the initial stage of use thereof, the on-ice performance is gradually reduced as the tires are abraded. Accordingly, in order to prevent an on-ice performance from being reduced when a tire is abraded, it is considered to form air bubbles in a tread for obtaining an effect of removing a micro water film, and tabular air bubbles produced by an organic fiber resin in addition to spherical air bubbles are considered to be formed as the above air bubbles.
Further, it is proposed to increase further more a friction coefficient thereof on an ice road surface by adding fine particles to the organic fibers described above to provide the tread with a larger scratching effect (refer to, for example, a patent document 1 and a patent document 2).
Further, natural rubber, high cis-polybutadiene and the like which have a glass transition temperature of -60°C or lower are used as a rubber component used for a tread. In particular, high cis-polybutadiene has a low glass transition temperature, and the on-ice performance is enhanced by increasing a proportion of high cis-polybutadiene contained in the rubber component. However, the DRY performance is reduced as the proportion thereof is increased. Enhancing the on-ice performance involves the problem that the tread tends to be reduced in a block rigidity and decreased in a DRY performance.
Carbon and silica are mainly used as a filler component used for a tread, and silica is used as a filler which can improve the WET performance described above. However, when silica is mixed with high cis-polybutadiene, involved therein are the problems that the workability is inferior and that it is difficult to elevate a dynamic performance of the composition as is the case with carbon black.
In recent years, a lot of technical developments of modified rubber used for a rubber composition containing silica and carbon black as a filler has been made in order to improve a low hysteresis property (low fuel consumption) and a reinforcing property with a filler. Among them, particularly a method in which a polymerization-active end of a diene base polymer obtained by anionic polymerization using an organic lithium compound is modified with an alkoxysilane derivative interacting with a filler is proposed as an effective method (refer to, for example, a patent document 3). However, the above methods are applied in many cases to polymers in which a living property of a polymer end can readily be secured, and cis-1,4-polybutadiene which is particularly important to a tread rubber for studless tires is modified therewith and improved in less cases in the above methods. Further, a satisfactory modification effect thereof is not necessarily obtained in rubber compositions prepared by blending silica and carbon black. Particularly in the case of cis-1,4-polybutaediene, the existing situation is that a modification effect thereof is scarcely obtained in carbon black-blended rubbers.
On the other hand, it is tried to obtain a conjugated diene polymer which is subjected to silane modification by reacting an alkoxysilane compound with an active end of a conjugated diene polymer having a high cis content which is obtained by using a rare earth element catalyst. According to the above method, an effect of improving the cold flow is large, but the Mooney viscosity is notably elevated by silane modification in many cases. Further, gel having a visible size is produced in the isolated copolymer in many cases, and a room for improvement has still been left from the viewpoint of the processability and the physical properties.
It has been proposed by the present applicants that the problems described above can be solved by reacting the polymer having an active end described above with a hydrocarbyloxysilane compound and subsequently subjecting the product

to secondary reaction with a specific compound (refer to, for example, a patent document 4).

Patent document 1: Japanese Patent Application Laid-Open No. 201371/2003
Patent document 2: Japanese Patent Application Laid-Open No. 233993/2001
Patent document 3: WO02/02356
Patent document 4: WO03/046020

DISCLOSURE OF THE INVENTION

In light of the situations described above, an object of the present invention is to provide a rubber composition which enhances a reinforcing property with a filler and maintains a DRY performance and which has an excellent on-ice performance and a pneumatic tire prepared by using the above rubber composition for a tread.

Intensive researches repeated by the present inventors in order to achieve the object described above have resulted in finding that the object can be achieved by reducing a temperature dependency of a hardness of rubber by a composition containing independent air bubbles and comprising a natural rubber and a specific end-modified conjugated diene base polymer as a rubber component, a specific fine particle-containing organic fiber and a filler. The present invention has been completed based on the above knowledge. That is, the present invention provides:

(1) A rubber composition having independent air bubbles and comprising (A) a rubber component comprising a natural rubber and an end-modified conjugated diene base polymer, (B) a fine particle-containing organic fiber and (C) a filler.

(2) The rubber composition according to the above item (1), wherein the end-modified conjugated diene base polymer is obtained by polymerizing a conjugated diene base monomer comprising principally 1,3-butadiene and produced by a method comprising a step for reacting the active end of a conjugated diene base polymer having an active end in which a content of a cis-1,4-bond in a conjugated diene part of a principal chain is 75 mole % or more with a hydrocarbyloxysilane compound I represented by the following Formula (I) and/or a partial condensation product thereof:

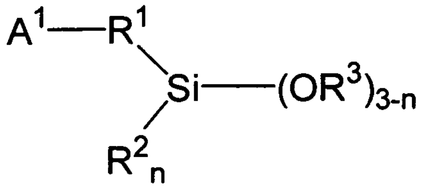

· · · (I)

(wherein $A^1$ is a monovalent group having at least one functional group selected from epoxy, thioepoxy, isocyanate, thioisocyanate, ketone, thioketone, aldehyde, thioaldehyde, imine, amide, trihydrocarbyl isocyanurate, carboxylic acid ester, thiocarboxylic acid ester, carboxylic anhydride, carboxylic halide and dihydrocarbyl carbonate; $R^1$ is a single bond or a divalent inactive hydrocarbon group; $R^2$ and $R^3$ each represent independently a monovalent aliphatic hydrocarbon group having 1 to 20 carbon atoms or a monovalent aromatic hydrocarbon group having 6 to 18 carbon atoms; n is an integer of 0 to 2; when a plurality of $OR^3$ is present, a plurality of $OR^3$ may be the same or different; and an active proton and an onium salt are not contained in a molecule).

(3) The rubber composition according to the above item (2), wherein the end-modified conjugated diene base polymer is produced by a method comprising a secondary modification step (a) in which a condensation accelerating agent is added to carry out condensation reaction of an introduced hydrocarbyloxysilane compound residue with the unreacted hydrocarbyloxysilane compound after the primary modification in which the hydrocarbyloxysilane compound I is reacted.

(4) The rubber composition according to the above item (2), wherein the end-modified conjugated diene base polymer is produced by a method comprising a step (b) for carrying out secondary modification in which the hydrocarbyloxysilane compound is further added and reacted under the presence of the condensation accelerating agent after the primary modification in which the hydrocarbyloxysilane compound I and/or the partial condensation product thereof are reacted.

(5) The rubber composition according to the above item (4), wherein the end-modified conjugated diene base polymer is produced by using at least one selected from the hydrocarbyloxysilane compound I represented by Formula (I)

and/or the partial condensation product thereof, a hydrocarbyloxysilane compound II represented by the following Formula (II) and/or a partial condensation product thereof and a hydrocarbyloxysilane compound III represented by the following Formula (III) and/or a partial condensation product thereof as the hydrocarbyloxysilane compound used for the secondary modification step (b) described above:

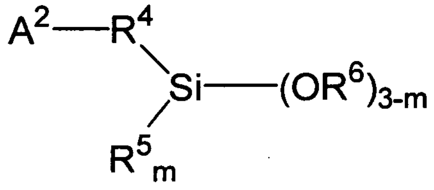

· · · (II)

(wherein $A^2$ is a monovalent group having at least one functional group selected from cyclic tertiary amine, non-cyclic tertiary amine, pyridine, sulfide, multisulfide and nitrile, an onium salt of cyclic tertiary amine, an onium salt of non-cyclic tertiary amine, a group having an allyl or benzyl Sn bond, sulfonyl, sulfinyl and nitrile; $R^4$ is a single bond or a divalent inactive hydrocarbon group; $R^5$ and $R^6$ each represent independently a monovalent aliphatic hydrocarbon group having 1 to 20 carbon atoms or a monovalent aromatic hydrocarbon group having 6 to 18 carbon atoms; m is an integer of 0 to 2; and when a plurality of $OR^6$ is present, a plurality of $OR^6$ may be the same or different):

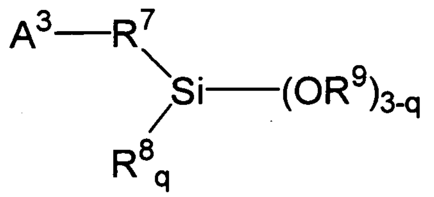

· · · (III)

(wherein $A^3$ represents alcohol, thiol, primary amine and an onium salt thereof, cyclic secondary amine and an onium salt thereof, non-cyclic secondary amine and an onium salt thereof; $R^7$ represents a single bond or a divalent inactive hydrocarbon group; $R^8$ and $R^9$ each represent independently a monovalent aliphatic hydrocarbon group having 1 to 20 carbon atoms or a monovalent aromatic hydrocarbon group having 6 to 18 carbon atoms; q is an integer of 0 to 2; and when a plurality of $OR^9$ is present, a plurality of $OR^9$ may be the same or different).

(6) The rubber composition according to any of the above items (1) to (5), wherein the end-modified conjugated diene base polymer is produced by using both of at least one selected from the group consisting of metal compounds represented by (1) to (3) described below and water as the condensation accelerating agent described above:

(1) a salt of carboxylic acid having 3 to 30 carbon atoms with tin having an oxidation number of 2:

$$Sn(OCOR^{10})_2$$

(wherein $R^{10}$ is an organic group having 2 to 19 carbon atoms, and when a plurality thereof is present, they may be the same or different),

(2) a compound of tin having an oxidation number of 4 which satisfies the following formula:

$$R^{11}{}_rSnA^4{}_tB^1{}_{(4-t-r)}$$

(wherein r is an integer of 1 to 3, and t is an integer of 1 or 2; t + r is an integer of 3 or 4; $R^{11}$ is an aliphatic hydrocarbon group having 1 to 30 carbon atoms; $B^1$ is a hydroxyl group or halogen; $A^4$ is a group selected from (a) a carboxyl group having 2 to 30 carbon atoms, (b) a $\alpha,\gamma$-dionyl group having 5 to 30 carbon atoms, (c) a hydrocarbyloxy group having 3 to 30 carbon atoms and (d) a siloxy group which is totally tri-substituted (may be the same or different) with a hydrocarbyl group having 1 to 20 carbon atoms and/or a hydrocarbyloxy group having 1 to 20 carbon atoms, and when a plurality of $A^4$ is present, they may be the same or different) and

(3) a titanium compound having an oxidation number of 4 which satisfies the following formula:

$A^5{}_xTiB^2{}_{(4-x)}$

(wherein x is an integer of 2 or 4; $A^5$ is (e) a hydrocarbyloxy group having 3 to 30 carbon atoms or (f) a siloxy group which is totally tri-substituted with an alkyl group having 1 to 30 carbon atoms and/or a hydrocarbyloxy group having 1 to 20 carbon atoms, and when a plurality of $A^5$ is present, they may be the same or different; and $B^2$ is a $\alpha,\gamma$-dionyl group having 5 to 30 carbon atoms).
(7) The rubber composition according to any of the above items (1) to (6), wherein the conjugated diene base polymer having an active end described above is produced by polymerizing a conjugated diene base monomer comprising principally 1,3-butadiene using a polymerization catalyst prepared by combining at least one compound selected from the respective factors of (i), (ii) and (iii) described below:

a component (i); a compound containing a rare earth element corresponding to an atomic number of 57 to 71 in the periodic table or a reaction product of the above compound with a Lewis base,
a component (ii); alumoxane and/or an organic aluminum compound corresponding to $AlR^{12}R^{13}R^{14}$ (wherein $R^{12}$ and $R^{13}$ are the same or different and are a hydrocarbon group having 1 to 10 carbon atoms or a hydrogen atom, and $R^{14}$ is a hydrocarbon group having 1 to 10 carbon atoms, provided that $R^{14}$ may be the same as or different from $R^{12}$ or $R^{13}$) and
a component (iii); an organic compound halogen-containing compound containing a Lewis acid, a complex compound of metal halide and a Lewis base and active halogen.

(8) The rubber composition according to any of the above items (1) to (7), wherein the polymer isolated before modification of the end-modified conjugated diene base polymer has a molecular weight distribution (Mw/Mn) of 1.5 to 3.5, a Mooney viscosity ($ML_{1+4}$, 100°C) of 5 to 50 at 100°C and a cis-1,4-bond content of 75 mole % or more in a conjugated diene part of a principal chain; and a monomer constituting the above conjugated diene base polymer comprises substantially only 1,3-butadiene.
(9) The rubber composition according to any of the above items (1) to (8), wherein the rubber component (A) comprises 10 to 90 % by mass of the natural rubber and 90 to 10 % by mass of the end-modified conjugated diene base polymer.
(10) The rubber composition according to any of the above items (1) to (9), comprising 0.02 to 20 parts by mass of the fine particle-containing organic fiber (B) per 100 parts by mass of the rubber component (A).
(11) The rubber composition according to any of the above items (1) to (10), further comprising (D) a fine particle-non-containing organic fiber per 100 parts by mass of the rubber component (A).
(12) The rubber composition according to the above item (11), wherein a total amount of the fine particle-containing organic fiber (B) and the fine particle-non-containing organic fiber (D) is 1 to 20 parts by mass per 100 parts by mass of the rubber component (A).
(13) The rubber composition according to the above item (11) or (12), wherein a proportion (fine particle-containing organic fiber (B)/fine particle-non-containing organic fiber (D)) of the fine particle-containing organic fiber (B) to the fine particle-non-containing organic fiber (D) is 98/2 to 2/98 in terms of a mass ratio.
(14) The rubber composition according to any of the above items (1) to (13), wherein the fine particle-containing organic fiber (B) contains 5 to 90 parts by mass of the fine particles per 100 parts by mass of a material constituting the above organic fiber.
(15) The rubber composition according to any of the above items (1) to (14), wherein the fine particle-containing organic fiber (B) contains the fine particles which have a Mohs hardness of 2 or more and an average particle diameter of 10 to 30 $\mu$m and in which 80 % by mass or more of a frequency count in a particle diameter distribution is 10 to 50 $\mu$m.
(16) The rubber composition according to any of the above items (10) to (15), wherein the fiber used for the fine particle-containing organic fiber (B) and the fine particle-non-containing organic fiber (D) has a diameter of 0.01 to 0.1 mm and a length of 0.5 to 20 mm.
(17) The rubber composition according to any of the above items (1) to (16), wherein the fine particle of the fine particle-containing organic fiber (B) has a frequency count of 20 % by mass or more in a peak value of a particle diameter distribution.
(18) The rubber composition according to any of the above items (1) to (17), wherein the fine particle of the fine particle-containing organic fiber (B) has an aspect ratio of 1.1 or more, and corner parts are present therein.
(19) The rubber composition according to any of the above items (1) to (18), wherein the fine particle of the fine particle-containing organic fiber (B) is selected from an inorganic fine particle and an organic fine particle.
(20) The rubber composition according to any of the above items (11) to (19), wherein a material constituting the fine particle-containing organic fiber (B) and the fine particle-non-containing organic fiber (D) is a crystalline polymer comprising polyethylene and/or polypropylene and has a melting point of 190°C or lower.

(21) The rubber composition according to any of the above items (1) to (20), wherein the filler (C) comprises carbon black and/or silica.
(22) The rubber composition according to the above item (21), comprising 5 to 95 parts by mass of carbon black and 5 to 95 parts by mass of silica per 100 parts by mass of the rubber component (A).
(23) The rubber composition according to any of the above items (1) to (22), wherein a foaming rate of the rubber composition having the independent air bubbles is 3 to 50 %.
(24) The rubber composition according to any of the above items (1) to (23), further comprising (E) an inorganic compound powder having an average particle diameter of 50 μm or less which is represented by the following Formula (IV) in an amount of 5 to 50 parts by mass per 100 parts by mass of the rubber component (A):

$$M \cdot xSiO_2 \cdot yH_2O \qquad (IV)$$

(wherein M is at least one oxide or hydroxide of metal selected from Al, Mg, Ti and Ca, and both of x and y are an integer of 0 to 10).
(25) The rubber composition according to the above item (24), wherein the inorganic compound powder of the component (E) represented by Formula (IV) is an inorganic compound powder represented by the following Formula (V):

$$Al_2O_3 \cdot mSiO_2 \cdot nH_2O \qquad (V)$$

(wherein m is an integer of 1 to 4, and n is an integer of 0 to 4).
(26) The rubber composition according to the above item (24), wherein the inorganic compound powder represented by Formula (IV) is an aluminum hydroxide powder.
(27) A pneumatic tire characterized by using the rubber composition according to any of the above items (1) to (26) for a tread.
(28) The pneumatic tire according to the above item (27), wherein it is a radial tire for passenger cars.

Brief Explanation of the Drawings

Fig. 1 is a cross-sectional outline explanatory drawing of the tire according to the present invention.
Fig. 2 (a) and (b) are the respective cross-sectional outline explanatory drawings along a circumferential direction and a width direction of a tread part in the tire according to the present invention.
Fig. 3 is an explanatory drawing for explaining a principle in which the fine particle-containing organic fibers are oriented to a fixed direction.

BEST MODE FOR CARRYING OUT THE INVENTION

First, the rubber composition of the present invention is characterized by having independent air bubbles and comprising (A) a rubber component comprising a natural rubber and an end-modified conjugated diene base polymer, (B) a fine particle-containing organic fiber and (C) a filler.
In the end-modified conjugated diene base polymer described above, the active end of a conjugated diene base polymer having an active end in which a content of a cis-1,4-bond is 75 mole % or more is reacted with a hydrocarbyloxysilane compound, and then a hydrocarbyloxysilane compound residue introduced into the end is further reacted with a specific compound.
A production process for the conjugated diene base polymer having an active end in which a content of a cis-1,4-bond is 75 mole % or more shall not specifically be restricted, and any of a solution polymerization method, a gas phase polymerization method and a bulk polymerization method can be used. The solution polymerization method is particularly preferred. A polymerization form thereof may be either of a batch system and a continuous system.
The conjugated diene compound as the polymerization monomer includes, for example, 1,3-butadiene, isoprene, 1,3-pentadiene, 2,3-dimethylbutadiene, 2-phenyl-1,3-butadiene, 1,3-hexadiene and the like. They may be used alone or in combination of two or more kinds thereof. Among them, 1,3-butadiene is particularly preferred.
Further, a small amount of other hydrocarbon monomers may be coexistent with the above conjugated diene monomers, and the conjugated diene monomers account preferably for 80 mole % or more based on the whole monomers.
A production process for an intermediate of the conjugated diene base polymer having a cis bond of 75 % shall not specifically be restricted, and publicly known processes can be used. The polymerization catalyst is preferably a catalyst prepared by combining at least one compound selected from the respective components of (i), (ii) and (iii)

described below.

Component (i):

In the present invention, the component (i) in the catalyst system used for polymerization of the end active polymer is a compound containing a rare earth element of an atomic number of 57 to 71 in the periodic table or a reaction product of the above compound with a Lewis base. In this case, among the rare earth elements of an atomic number of 57 to 71, neodymium, praseodymium, cerium, lanthanum, gadolinium and the like or mixtures thereof are preferred, and neodymium is particularly preferred.

The rare earth element-containing compound described above is preferably a salt which is soluble in hydrocarbon solvents, and the salt includes, to be specific, carboxylic acid salts, alkoxides, β-diketone complexes, phosphoric acid salts and phosphorous acid salts of the rare earth elements described above. Among them, the carboxylic acid salts and the phosphoric acid salts are preferred, and the carboxylic acid salts are particularly preferred.

In this regard, the hydrocarbon solvents include saturated aliphatic hydrocarbons having 4 to 10 carbon atoms such as butane, pentane, hexane, heptane and the like, saturated alicyclic hydrocarbons having 5 to 20 carbon atoms such as cyclopentane, cyclohexane and the like, monoolefins such as 1-butene, 2-butene and the like, aromatic hydrocarbons such as benzene, toluene, xylene and the like and halogenated hydrocarbons such as methylene chloride, chloroform, trichloroethylene, perchloroethylene, 1,2-dichloroethane, chlorobenzene, bromobenzene, chlorotoluene and the like.

The carboxylic acid salts of the rare earth elements described above include compounds satisfying the following formula:

$$(R^{14}\text{-}CO_2)_3M$$

(wherein $R^{14}$ is a hydrocarbon group having 1 to 20 carbon atoms, and M is a rare earth element of an atomic number of 57 to 71 in the periodic table). In this regard, $R^{14}$ may be saturated or unsaturated, and it is preferably an alkyl group and an alkenyl group and may be linear, branched or cyclic. The carboxyl group is bonded to a primary, secondary or tertiary carbon atom. The above carboxylic acid salts include, for example, salts of octanoic acid, 2-ethyl-hexanoic acid, oleic acid, neodecanoic acid, stearic acid, benzoic acid, naphthenic acid, versatic acid (trade name, carboxylic acid in which a carboxyl group is bonded to a tertiary carbon atom, manufactured by Shell Chemicals Japan Ltd.) and the like. Among them, the salts of 2-ethyl-hexanoic acid, neodecanoic acid, naphthenic acid and versatic acid are preferred.

The alkoxide of the rare earth elements described above includes compounds satisfying the following formula:

$$(R^{15}O)_3M$$

(wherein $R^{15}$ is a hydrocarbon group having 1 to 20 carbon atoms, and M is a rare earth element of an atomic number of 57 to 71 in the periodic table). An alkoxy group represented by $R^{15}O$ includes a 2-ethyl-hexylalkoxy group, an oleylalkoxy group, a stearylalkoxy group, a phenoxy group, a benzylalkoxy group and the like. Among them, a 2-ethyl-hexylalkoxy group and a benzylalkoxy group are preferred.

The β-diketone complexes of the rare earth elements described above include acetylacetone complexes, benzoylacetone complexes, propionitrileacetone complexes, valerylacetone complexes and ethylacetylacetone complexes of the rare earth elements described above. Among them, the acetylacetone complexes and the ethylacetylacetone complexes are preferred.

The phosphoric acid salts and the phosphorous acid salts of the rare earth elements described above include salts of the rare earth elements described above with bis(2-ethylhexyl) phosphate, bis(1-methylheptyl) phosphate, bis (p-nonylphenyl) phosphate, bis(polyethylene glycol-p-nonylphenyl) phosphate, (1-methylheptyl) (2-ethylhexyl) phosphate, (2-ethylhexyl) (p-nonylphenyl) phosphate, mono-2-ethylhexyl 2-ethylhexylphosphonate, mono-p-nonylphenyl 2-ethylhexylphosphonate, bis(2-ethylhexyl) phosphinate, bis(1-methylheptyl) phosphinate, bis(p-nonylphenyl) phosphinate, (1-methylheptyl) (2-ethylhexyl) phosphinate, (2-ethylhexyl) (p-nonylphenyl) phosphinate and the like. Among them, preferred are the salts of the rare earth elements with bis(2-ethylhexyl) phosphate, bis(1-methylheptyl) phosphate, mono-2-ethylhexyl 2-ethylhexylphosphonate and bis(2-ethylhexyl) phosphinate.

Among the rare earth element-containing compounds described above, the phosphoric acid salts of neodymium and the carboxylic acid salts of neodymium are more preferred, and in particular, branched carboxylic acid salts of neodymium such as 2-ethylhexanoate of neodymium, neodecanoate of neodymium, versatate of neodymium and the like are most preferred.

Further, the component (i) may be a reaction product of the rare earth element-containing compound described above with a Lewis base. In the above reaction product, the rare earth element-containing compound is enhanced in a solubility in a solvent by the Lewis base, and it can stably be stored over a long period of time. The Lewis base used in order to readily dissolve the rare earth element-containing compounds described above in a solvent and stably store them over a long period of time is used in a proportion of 0 to 30 mole, preferably 1 to 10 mole per mole of the rare earth

element in the form of a mixture of both components or a product obtained by reacting in advance both components. In this connection, the Lewis base includes acetylacetone, tetrahydrofuran, pyridine, N,N-dimethylformamide, thiophene, diphenyl ether, triethylamine, organic phosphorus compounds and monohydric or dihydric alcohols.
The rare earth element-containing compounds or the reaction products of the above compounds with the Lewis bases each described above as the component (i) can be used alone or in a mixture of two or more kinds thereof.

Component (ii):

In the present invention, the component (ii) in the catalyst system used for polymerization of the end active polymer is an organic aluminumoxy compound and/or an organic aluminum compound represented by the following formula:

$$AlR^{16}R^{17}R^{18}$$

(wherein $R^{16}$ and $R^{17}$ are the same or different and represent a hydrocarbon group having 1 to 10 carbon atoms or a hydrogen atom, and $R^{18}$ is a hydrocarbon group having 1 to 10 carbon atoms, provided that $R^{18}$ may be the same as or different from $R^{16}$ or $R^{17}$).

The organic aluminumoxy compound, so-called alumoxane includes methylaluminoxane, ethylaluminoxane, propylaluminoxane, butylaluminoxane, chloroaluminoxane and the like. Addition of aluminoxane sharpens the molecular weight distribution and enhances as well an activity of the catalyst.

The organic aluminum compound includes trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; hydrogenated diethylaluminum, hydrogenated di-n-propylaluminum, hydrogenated di-n-butylaluminum, hydrogenated diisobutylaluminum, hydrogenated dihexylaluminum, hydrogenated diisohexylaluminum, hydrogenated dioctylaluminum, hydrogenated diisooctylaluminum; ethylaluminum dihydride, n-propylaluminum dihydride, isobutylaluminum dihydride and the like. Among them, triethylaluminum, triisobutylaluminum, hydrogenated diethylaluminum and hydrogenated diisobutylaluminum are preferred. The organic aluminum compounds as the component (B) described above can be used alone or in a mixture of two or more kinds thereof.

Component (iii):

In the present invention, the component (iii) in the catalyst system used for polymerization of the end active polymer is at least one halogen compound selected from the group consisting of a Lewis acid, a complex compound of metal halide and a Lewis base and an organic compound containing active halogen.
The Lewis acids described above have a Lewis acidity and are soluble in hydrocarbons. To be specific, capable of being shown as the examples thereof are methylaluminum dibromide, methylaluminum dichloride, ethylaluminum dibromide, ethylaluminum dichloride, butylaluminum dibromide, butylaluminum dichloride, dimethylaluminum bromide, dimethylaluminum chloride, diethylaluminum bromide, diethylaluminum chloride, dibutylaluminum bromide, dibutylaluminum chloride, methylaluminum sesquibromide, methylaluminum sesquichloride, ethylaluminum sesquibromide, ethylaluminum sesquichloride, dibutyltin dichloride, aluminum tribromide, antimony trichloride, antimony pentachloride, phosphorus trichloride, phosphorus pentachloride, tin tetrachloride, silicon tetrachloride and the like. Among them, preferred are diethylaluminum chloride, ethylaluminum sesquichloride, ethylaluminum dichloride, diethylaluminum bromide, ethylaluminum sesquibromide and ethylaluminum dibromide.
Further, reaction products of alkylaluminums with halogens such as reaction products of triethylaluminum with bromine can be used as well.

The metal halides constituting the complex compounds of the metal halides with the Lewis bases include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper iodide, silver chloride, silver bromide, silver iodide, gold chloride, gold iodide, gold bromide and the like. Among them, magnesium chloride, calcium chloride, barium chloride, manganese chloride, zinc chloride and copper chloride are preferred, and magnesium chloride, manganese chloride, zinc chloride and copper chloride are particularly preferred.

The Lewis bases constituting the complex compounds of the metal halides with the Lewis bases are preferably phosphorus compounds, carbonyl compounds, nitrogen compounds, ether compounds, alcohols and the like. To be specific, they include tributyl phosphate, tri-2-ethylhexyl phosphate, triphenyl phosphate, tricresyl phosphate, triethylphosphine, tributylphosphine, triphenylphosphine, diethylphosphinoethane, diphenylphosphinoethane, acetylacetone,

benzoylacetone, propionitrileacetone, valerylacetone, ethylacetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, versatic acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, lauryl alcohol and the like. Among them, preferred are tri-2-ethylhexyl phosphate, tricresyl phosphate, acetylacetone, 2-ethylhexanoic acid, versatic acid, 2-ethylhexyl alcohol, 1-decanol and lauryl alcohol.

The Lewis bases described above are reacted in a proportion of 0.01 to 30 mole, preferably 0.5 to 10 mole per mole of the metal halide described above. Use of the reaction products with the above Lewis bases makes it possible to reduce metals remaining in the polymer.

The organic compound containing active halogen described above includes benzyl chloride and the like.

In the present invention, the amounts or the composition ratios of the respective components in the catalyst system used for polymerization of the conjugated diene base polymer are suitably selected according to the purpose or necessity thereof. Among them, the component (i) is used preferably in a proportion of 0.00001 to 1.0 millimole, more preferably 0.0001 to 0.5 millimole per 100 g of the conjugated diene base compound. Controlling a use amount of the component (i) to the range described above provides the excellent polymerization activity and makes a deashing step unnecessary.

Also, a proportion of the component (i) to the organic aluminum compound of the component (ii) is 1 : 1 to 1 : 700, preferably 1 : 3 to 1 : 500 in terms of a mole ratio of the component (i) : the organic aluminum compound of the component (ii).

Further, a proportion of the component (i) to the halogen contained in the component (iii) is 1 : 0.1 to 1 : 30, preferably 1 : 0.2 to 1 : 15 and more preferably 1 : 2.0 to 1 : 5.0 in terms of a mole ratio.

A proportion of aluminum contained in alumoxane which is the component (ii) to the component (i) is 1 : 1 to 700 : 1, preferably 3 : 1 to 500 : 1 in terms of a mole ratio. Controlling the above catalyst amount or constitutional component ratios to the ranges described above allows the catalyst to act at a high activity and makes a step for removing a catalyst residue unnecessary, and therefore it is preferred.

Further, the polymerization reaction may be carried out under the coexistence of hydrogen gas for the purpose of controlling a molecular weight of the polymer in addition to the components (i) to (iii) described above.

A conjugated diene compound such as 1,3-butadiene and the like in addition to the component (i), the component (ii) and the component (iii) described above may be used as the catalyst component, if necessary, in a small amount, to be specific, in a proportion of 0 to 1000 mole per mole of the compound of the component (i). The conjugated diene compound such as 1,3-butadiene and the like is not essential as the catalyst component, but use thereof in combination provides an advantage of enhancing markedly the catalyst activity.

The catalyst described above is produced, for example, by dissolving the component (i) to the component (iii) in a solvent and reacting them, if necessary, with the conjugated diene base compound such as 1,3-butadiene and the like. In the above case, an addition order of the respective components shall not specifically be restricted, and these respective components are preferably mixed in advance, reacted and ripened from the viewpoint of enhancing the polymerization activity and shortening the polymerization initiation induction time. In this connection, the ripening temperature is about 0 to 100°C, preferably 20 to 80°C. If it is lower than 0°C, ripening is less liable to be sufficiently carried out, and if it exceeds 100°C, a reduction in the catalyst activity and broadening of the molecular weight distribution are brought about in a certain case.

The ripening time shall not specifically be restricted, and the components can be ripened as well by bringing them into contact in the line before adding them to the polymerization reaction bath. Usually, a ripening time of 0.5 minute or longer is sufficient, and the solution is stable for several days.

In the above polymerization, all the raw materials participating in the polymerization such as the catalyst, the solvent, the monomers and the like are used preferably after substantially removing reaction inhibitors such as water, oxygen, carbon dioxide, protic compounds and the like from them.

In the polymer according to the present invention which is used in the reaction of the primary modification, at least 10 % of the polymer chain has preferably a living property.

In the above primary modification reaction method, a hydrocarbyloxysilane compound represented by the following Formula (I) and/or a partial condensation product thereof can be used as the hydrocarbyloxysilane compound used for reaction with an active end of the polymer:

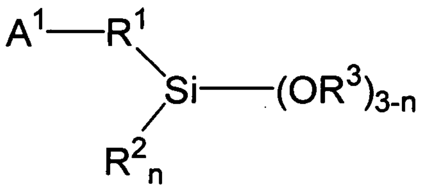

· · · (I)

(wherein $A^1$ is a monovalent group having at least one functional group selected from (thio)epoxy, (thio)isocyanate, (thio)ketone, (thio)aldehyde, imine, amide, isocyanuric acid triesters, hydrocarbyl (thio)carboxylate, metal salts of (thio) carboxylic acid, carboxylic anhydride, carboxylic halide and dihydrocarbyl carbonate; $R^1$ is a single bond or a divalent inactive hydrocarbon group; $R^2$ and $R^3$ each represent independently a monovalent aliphatic hydrocarbon group having 1 to 20 carbon atoms or a monovalent aromatic hydrocarbon group having 6 to 18 carbon atoms; n is an integer of 0 to 2; when a plurality of $OR^3$ is present, a plurality of $OR^3$ may be the same as or different from each other; and an active proton and an onium salt are not contained in a molecule).

In the above case, the partial condensation product is a compound prepared by converting a part (not all) of SiOR in the hydrocarbyloxysilane compound to a SiOSi bond by condensation.

In Formula (I) described above, imine out of the functional groups in $A^1$ includes ketimine, aldimine and amidine, and (thio)carboxylic acid esters include unsaturated carboxylic acid esters such as acrylates and methacrylates. Further, alkaline metals, alkaline earth metals, Al, Sn, Zn and the like can be listed as metals in the metal salts of (thio)carboxylic acid.

An alkylene group having 1 to 20 carbon atoms can preferably be listed as the divalent inactive hydrocarbon group represented by $R^1$. The above alkylene group may be linear, branched or cyclic, and the linear group is particularly suited. The examples of the above linear alkylene group include methylene, ethylene, trimethylene, tetramethylene, pentamethylene, hexamethylene, octamethylene, decamethylene, dodecamethylene and the like.

An alkyl group having 1 to 20 carbon atoms, an alkenyl group having 2 to 18 carbon atoms, an aryl group having 6 to 18 carbon atoms, an aralkyl group having 7 to 18 carbon atoms and the like can be listed as $R^2$ and $R^3$. In this regard, the alkyl group and the alkenyl group each described above may be linear, branched or cyclic, and the examples thereof include methyl, ethyl, n-propyl, isopropyl, n-butyl, isobutyl, sec-butyl, tert-butyl, pentyl, hexyl, octyl, decyl, dodecyl, cyclopentyl, cyclohexyl, vinyl, propenyl, allyl, hexenyl, octenyl, cyclopentenyl, cyclohexenyl and the like. The above aryl group may have a substituent such as a lower alkyl group and the like on an aromatic ring, and the examples thereof include phenyl, tolyl, xylyl, naphthyl and the like. Further, the above aralkyl group may have a substituent such as a lower alkyl group and the like on an aromatic ring, and the examples thereof include benzyl, phenethyl, naphthylmethyl and the like.

The term n is an integer of 0 to 2, preferably 0, and it is necessary that an active proton and an onium salt are not contained in the molecule.

The hydrocarbyloxysilane compound represented by the above Formula (I), for example, a (thio)epoxy group-containing hydrocarbyloxysilane compound includes preferably 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyl(methyl)dimethoxysilane and compounds obtained by substituting an epoxy group in the above compounds with a thioepoxy group. Among them, 3-glycidoxypropyltrimethoxysilane and 2-(3,4-epoxycyclohexyltrimethoxysilane are particularly suited.

The imine group-containing hydrocarbyloxysilane compound includes preferably N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine and trimethoxysilyl compounds, methyldiethoxysilyl compounds, ethyldiethoxysilyl compounds, methyldimethoxysilyl and ethyldimethoxysilyl compounds each corresponding to the above triethoxysilyl compounds. Among them, N-(1-methylpropylidene)-3-(triethoxysilyl)-1-propaneamine and N-(1,3-dimethylbutylidene)-3-(triethoxysilyl)-1-propaneamine are particularly suited.

Further, the following compounds can be listed as the other hydrocarbyloxysilane compounds. That is, 1-[3-(triethoxysilyl)propyl]-4,5-dihydroimidazole, 1-[3-(trimethoxysilyl)propyl]-4,5-dihydroimidazole, 3-[10-(triethoxysilyl)decyl]-4-oxazoline and the like can be listed as the imine (amidine) group-containing compound. Among them, capable of being preferably listed are 3-(1-hexamethyleneimino)propyl(triethoxy)silane, (1-hexamethyleneimino)methyl(trimethoxy)silane, 1-[3-(triethoxysilyl)propyl]-4,5-dihydroimidazole and 1-[3-(trimethoxysilyl)propyl]-4,5-dihydroimidazole. Further, they include N-(3-triethoxysilylpropyl)-4,5-dihydroimidazole, N-(3-isopropoxysilylpropyl)-4,5-dihydroimidazole, N-(3-methyldiethoxysilylpropyl)-4,5-dihydroimidazole and the like. Among them, N-(3-triethoxysilylpropyl)-4,5-dihydroimidazole is preferred.

Also, the carboxylic acid ester group-containing compound includes 3-methacryloyloxypropyltriethoxysilane, 3-methacryloyloxypropyltrimethoxysilane, 3-methacryloyloxypropylmethyldiethoxysilane, 3-methacryloyloxypropyltriisopropoxysilane and the like. Among them, 3-methacryloyloxypropyltrimethoxysilane is preferred. Further, the isocyanate group-containing compound includes 3-isocyanatepropyltrimethoxysilane, 3-isocyanatepropyltriethoxysilane, 3-isocyanatepropylmethyldiethoxysilane, 3-isocyanatepropyltriisopropoxysilane and the like. Among them, 3-isocyanatepropyltriethoxysilane is preferred. Also, the carboxylic anhydride-containing compound includes 3-triethoxysilylpropylsuccinic anhydride, 3-trimethoxysilylpropylsuccinic anhydride, 3-methyldiethoxysilylpropylsuccinic anhydride and the like. Among them, 3- triethoxysilylpropylsuccinic anhydride is preferred.
The above hydrocarbyloxysilane compounds may be used alone or in combination of two or more kinds thereof. Further, the partial condensation compounds of the hydrocarbyloxysilane compounds described above can be used as well.

In the primary modification described above, the polymer having an active end is first reacted at the above end with the hydrocarbyloxysilane compound described above, and required is any of (1) a method in which the introduced residue is subsequently reacted with carboxylic acid partial ester of polyhydric alcohol to be stabilized and (2) a method in which the residue is reacted with the remaining or newly added hydrocarbyloxysilane compound under the presence of a condensation accelerating agent. The latter method (2) further includes the following methods (2-1) to (2-3). That is:

(2-1); a method in which the hydrocarbyloxysilane compound and the condensation accelerating agent are further added after the primary modification to carry out the secondary modification,
(2-2); a method in which the condensation accelerating agent is added after the primary modification to carry out condensation reaction of the hydrocarbyloxysilane compound residue introduced into the end with the unreacted hydrocarbyloxysilane compound and
(2-3); a method in which subsequently to the respective reactions of (2-1) and (2-2), the residue is further reacted with carboxylic acid partial ester of polyhydric alcohol to be stabilized.

In this respect, the carboxylic acid partial ester of polyhydric alcohol means a partial ester which is an ester of polyhydric alcohol and carboxylic acid and which has one or more hydroxyl groups.

To be specific, esters of saccharides or modified saccharides having 4 or more carbon atoms with fatty acids are preferably used. The above esters include more preferably ester compounds obtained by bonding to polyhydric alcohols, one to three of (a) fatty acid partial esters with polyhydric alcohols, particularly partial esters (may be any of monoesters, diesters and trimesters) of saturated higher fatty acids or unsaturated higher fatty acids having 10 to 20 carbon atoms with polyhydric alcohols or (b) partial esters of polyvalent carboxylic acids with higher alcohols.

Saccharides (may be or may not be hydrogenated) having at least 3 hydroxyl groups and 5 or 6 carbon atoms, glycols and polyhydroxy compounds are preferably used as the polyhydric alcohols used for raw materials of the partial esters described above. Saturated or unsaturated higher fatty acids having 10 to 20 carbon atoms, for example, stearic acid, lauric acid and palmitic acid are preferably used as the raw material fatty acids.
Among the fatty acid partial esters of polyhydric alcohols, sorbitan fatty acid esters are preferred, and they include, to be specific, sorbitan monolauric acid ester, sorbitan monopalmitic acid ester, sorbitan monostearic acid ester, sorbitan tristearic acid ester, sorbitan monooleic acid ester and sorbitan trioleic acid ester.
The commercial products include SPAN 60 (sorbitan stearic acid ester), SPAN 80 (sorbitan monooleic acid ester) and SPAN 85 (sorbitan trioleic acid ester) as trade names of ICI Company.
An addition amount of the above partial esters is preferably 0.2 to 10 mole, particularly preferably 1 to 10 mole per mole of a hydrocarbyloxysilyl group contained in the polymer.

The hydrocarbyloxysilane compound I represented by Formula (I) and/or the partial condensation product thereof can be used as the hydrocarbyloxysilane compound described above in combination with a hydrocarbyloxysilane compound II represented by Formula (II) and/or a partial condensation product thereof and a hydrocarbyloxysilane compound III represented by Formula (III) and/or a partial condensation product thereof:

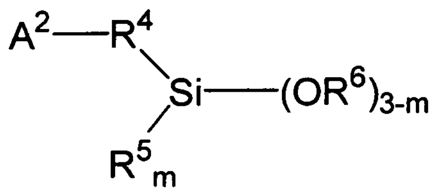

· · · (II)

(wherein $A^2$ is a monovalent group having at least one functional group selected from cyclic tertiary amine, non-cyclic tertiary amine, pyridine, sulfide, multisulfide and nitrile, an onium salt of cyclic tertiary amine, an onium salt of non-cyclic tertiary amine, a group having an allyl or benzyl Sn bond, sulfonyl, sulfinyl and nitrile; $R^4$ is a single bond or a divalent inactive hydrocarbon group; $R^5$ and $R^6$ each represent independently a monovalent aliphatic hydrocarbon group having 1 to 20 carbon atoms or a monovalent aromatic hydrocarbon group having 6 to 18 carbon atoms; m is an integer of 0 to 2; and when a plurality of $OR^6$ is present, a plurality of $OR^6$ may be the same or different):

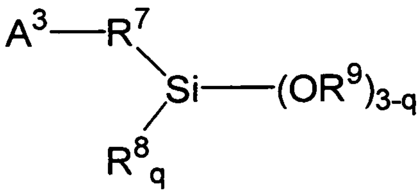

· · · (III)

(wherein $A^3$ represents alcohol, thiol, primary amine or an onium salt thereof, cyclic secondary amine or an onium salt thereof, non-cyclic secondary amine or an onium salt thereof; $R^7$ represents a single bond or a divalent inactive hydrocarbon group; $R^8$ and $R^9$ each represent independently a monovalent aliphatic hydrocarbon group having 1 to 20 carbon atoms or a monovalent aromatic hydrocarbon group having 6 to 18 carbon atoms; q is an integer of 0 to 2; and when a plurality of $OR^9$ is present, a plurality of $OR^9$ may be the same or different).

The above hydrocarbyloxysilane compound represented by Formula (II) and/or the partial condensation product thereof are not substantially reacted directly with the active end and remain as the unreacted compound in the reaction system, and therefore they are consumed for condensation with the hydrocarbyloxysilane compound residue introduced into the active end.

In Formula (II) described above, the non-cyclic tertiary amine among the groups represented by $A^2$ includes N,N-(disubstituted) aromatic amines such as N,N-(disubstituted) aniline and the like, and the cyclic tertiary amine can contain (thio)ether as a part of a ring. The divalent inactive hydrocarbon group among the groups represented by $R^4$ and the groups represented by $R^5$ and $R^6$ each are the same as explained for the groups represented by $R^1$, $R^2$ and $R^3$ in Formula (I) described above. It is necessary that an active proton and an onium salt are not contained in the molecule.

The hydrocarbyloxysilane compound represented by the above Formula (II), for example, the non-cyclic tertiary amine group-containing hydrocarbyloxysilane compound includes 3-dimethylaminopropyl(triethoxy)silane, 3-dimethylaminopropyl(trimethoxy)silane, 3-diethylaminopropyl(triethoxy)silane, 3-diethylaminopropyl(trimethoxy)silane, 2-dimethylaminoethyl(triethoxy)silane, 2-dimethylaminoethyl (trimethoxy)silane, 3-dimethylaminopropyl(diethoxy)methylsilane, 3-dibutylaminopropyl(triethoxy)silane and the like. Among them, 3-diethylaminopropyl(triethoxy)silane and 3-dimethylaminopropyl(triethoxy)silane are suited.

Also, the cyclic tertiary amine group-containing hydrocarbyloxysilane compound includes 3-(1-hexamethyleneimino)propyl(triethoxy)silane, 3-(1-hexamethyleneimino)propyl(trimethoxy)silane, (1-hexamethyleneimino)methyl(trimethoxy)silane, (1-hexamethyleneimino)methyl(triethoxy)silane, 2-(1-hexamethyleneimino)ethyl(triethoxy)silane, 2-(1-hexamethyleneimino)ethyl(trimethoxy)silane, 3-(1-pyrrolidinyl)propyl(triethoxy)silane, 3-(1-pyrrolidinyl)propyl(trimethoxy)silane, 3-(1-heptamethyleneimino)propyl(triethoxy)silane, 3-(1-dodecamethyleneimino)propyl(triethoxy)silane, 3-(1-hexamethyleneimino)propyl(diethoxy)methylsilane and 3-(1-hexamethyleneimino)propyl(diethoxy)ethylsilane. In particular, 3-(1-hexamethyleneimino)propyl(triethoxy)silane is suited.

Further, 2-(trimethoxysilylethyl)pyridine, 2-(triethoxysilylethyl)pyridine, 4-ethylpyridine and the like can be listed as the other hydrocarbyloxysilane compounds.

The above hydrocarbyloxysilane compounds may be used alone or in combination of two or more kinds thereof. Further, partial condensation products of the above hydrocarbyloxysilane compounds can be used as well.

Next, in the embodiment of the method (2-1) described above, at least one selected from the hydrocarbyloxysilane compound I represented by Formula (I) and the partial condensation product thereof, the hydrocarbyloxysilane compound II represented by Formula (II) and the partial condensation product thereof and the hydrocarbyloxysilane compound III represented by Formula (III) and the partial condensation product thereof can be used as the hydrocarbyloxysilane compound II condensed with the residue of the hydrocarbyloxysilane compound I described above which is introduced into the active end of the polymer.

In Formula (III) described above, the primary amine among the groups represented by $A^3$ includes aromatic amines such as aniline and the like, and the non-cyclic secondary amine includes N-(monosubstituted) aromatic amines such as N-(monosubstituted) aniline and the like. Further, an onium salt of the non-cyclic tertiary amine includes onium salts of N,N-(disubstituted) aromatic amines such as N,N-(disubstituted) aniline and the like. Also, in the cases of the cyclic secondary amine and the cyclic tertiary amine, they can contain (thio)ether as a part of the ring. The divalent

inactive hydrocarbon group among the groups represented by $R^7$ and the groups represented by $R^8$ and $R^9$ each are the same as explained for the groups represented by $R^1$, $R^2$ and $R^3$ in Formula (I) described above.

The hydrocarbyloxysilane compound represented by the above Formula (III) includes, for example, 3-aminopropyltrimethoxysilane, 3-aminopropyltriethoxysilane, hydroxymethyltrimethoxysilane, hydroxymethyltriethoxysilane, mercaptomethyltrimethoxysilane, mercaptomethyltriethoxysilane, aminophenyltrimethoxysilane, aminophenyltriethoxysilane, 3-(N-methylamino)propyltrimethoxysilane, 3-(N-methylamino)propyltriethoxysilane, octadecyldimethyl(3-trimethylsilylpropyl)ammonium chloride, octadecyldimethyl(3-triethylsilylpropyl)ammonium chloride, cyanomethyltrimethoxysilane, cyanomethyltriethoxysilane, sulfonylmethyltrimethoxysilane, sulfonylmethyltriethoxysilane, sulfinylmethyltrimethoxysilane, sulfinylmethyltriethoxysilane and the like.

The above hydrocarbyloxysilane compounds III may be used alone or in combination of two or more kinds thereof.

In the present invention, in the case of the method (2) described above in which the residue is reacted with the remaining or newly added hydrocarbyloxysilane compound under the presence of the condensation accelerating agent, the polymer having an active end is first reacted with a substantially stoichiometric amount of the hydrocarbyloxysilane compound I added to the reaction system, and a hydrocarbyloxysilyl group is introduced into substantially all of the above ends (first modification). Further, the hydrocarbyloxysilyl group-containing compound is reacted with the hydrocarbyloxysilyl group introduced above, whereby the hydrocarbyloxysilane compound residue of a larger amount than an equivalent is introduced into the above active end. This allows further more effects of the low heat generating property and the processability to be obtained, and therefore the method (2) described above is preferred to the method (1).

In the present invention, in the case where the hydrocarbyloxysilane compound is an alkoxysilyl compound, condensation reaction between the hydrocarbyloxysilyl groups in the method (2) described above takes place preferably between (remaining or newly added) isolated alkoxysilane and an alkoxysilyl group of the polymer end or takes place preferably between the alkoxysilyl groups of the polymer ends in a certain case, and reaction between the isolated alkoxysilanes is not necessary. Accordingly, when the alkoxysilane compound is newly added, a hydrolytic property of an alkoxysilyl group thereof is preferably controlled so that it does not exceed a hydrolytic property of an alkoxysilyl group at the polymer end from the viewpoint of the efficiency. Suited is, for example, combination in which a compound containing a trimethoxysilyl group having a large hydrolytic property is used for the alkoxysilane I and in which a compound having an alkoxysilyl group (for example, a triethoxysilyl group) inferior in a hydrolytic property to the above group is used for the alkoxysilane II newly added. In other words, combination in which a triethoxysilyl group-containing compound is used for the alkoxysilane I and in which a trimethoxysilyl group-containing compound is used for the alkoxysilane II is included in the scope of the present invention, but it is not preferred from the viewpoint of the reaction efficiency.

In the modification reaction of the present invention, both of solution reaction and solid phase reaction can be used, and the solution reaction (may be a solution containing an unreacted monomer used in polymerization) is suited. A manner of the above modification reaction shall not specifically be restricted, and it may be carried out by means of a batch type reactor or it may be carried out by a continuous system using an apparatus such as a multistage continuous reactor, an inline mixer and the like. Also, it is essential to carry out the above modification reaction before carrying out desolvent treatment, water treatment, heat treatment and various operations necessary for isolating the polymer after finishing the polymerization reaction.

The polymerization temperature for the conjugated diene base polymer can be used as it is for temperature in the modification reaction described above. To be specific, a temperature of 20 to 100°C is listed as the preferred range. If the temperature is lowered, the polymer tends to be increased in a viscosity, and if the temperature grows high, the polymerization active end is liable to be deactivated. Accordingly, both are not preferred.

Next, the secondary modification described above is carried out preferably under the presence of a condensation accelerating agent in order to accelerate the secondary modification. Combination of water with a metal compound which is usually known as a curing catalyst for alkoxy condensation curing type room temperature cross-linking (RTV) silicone can be used as the above condensation accelerating agent. For example, combination of water with carboxylic acid salt of tin and/or titanium alkoxide can preferably be listed. A method for adding the condensation accelerating agent to a reaction system of water shall not specifically be restricted. A solution of an organic solvent which is soluble in water such as alcohol and the like may be used, and water may be added, dispersed and dissolved directly in a hydrocarbon solution by using various chemical engineering methods.

The condensation accelerating agent described above comprises preferably at least one selected from the group consisting of metal compounds represented by (1) to (3) described below and water:

(1) a salt of carboxylic acid having 3 to 30 carbon atoms with tin having an oxidation number of 2:

$$Sn(OCOR^{10})_2$$

(wherein $R^{10}$ is an organic group having 2 to 19 carbon atoms, and when a plurality thereof is present, they may be the same or different),

(2) a compound of tin having an oxidation number of 4 which satisfies the following formula:

$$R^{11}_rSnA^4_tB^1_{(4-t-r)}$$

(wherein r is an integer of 1 to 3, and t is an integer of 1 or 2; t + r is an integer of 3 or 4; $R^{11}$ is an aliphatic hydrocarbon group having 1 to 30 carbon atoms; $B^1$ is a hydroxyl group or halogen; $A^4$ is a group selected from (a) a carboxyl group having 2 to 30 carbon atoms, (b) a α,γ-dionyl group having 5 to 30 carbon atoms, (c) a hydrocarbyloxy group having 3 to 30 carbon atoms and (d) a siloxy group which is totally tri-substituted (may be the same or different) with a hydrocarbyl group having 1 to 20 carbon atoms and/or a hydrocarbyloxy group having 1 to 20 carbon atoms, and when a plurality of $A^4$ is present, they may be the same or different) and

(3) a titanium compound having an oxidation number of 4 which satisfies the following formula:

$$A^5_xTiB^2_{(4-x)}$$

(wherein x is an integer of 2 or 4; $A^5$ is (a) a hydrocarbyloxy group having 3 to 30 carbon atoms or (b) a siloxy group which is totally tri-substituted with an alkyl group having 1 to 30 carbon atoms and/or an alkoxy group having 1 to 20 carbon atoms, and when a plurality of $A^5$ is present, they may be the same or different; and $B^2$ is a α,γ-dionyl group having 5 to 30 carbon atoms).

Capable of being suitably used as the carboxylic acid salt of tin described above are, to be specific, (1) dicarboxylic acid salts of divalent tin (particularly preferably carboxylic acid salts having 8 to 20 carbon atoms) and (2) dicarboxylic acid salts (including bis(hydrocarbyldicarboxylic acid) salts), bis(α,γ-diketonate), alkoxy halides, monocarboxylic acid salt hydroxide, alkoxy(trihydrocarbyl siloxide), alkoxy(dihydrocarbylalkoxy siloxide), Bis(trihydrocarbyl siloxide), and Bis(dihydrocarbylalkoxy siloxide) of tetravalent dihydrocarbyltin. A hydrocarbyl group bonded directly to tin has preferably 4 or more carbon atoms, particularly preferably 4 to 8 carbon atoms.

The titanium compound described above includes tetraalkoxide, dialkoxybis(α,γ-diketonate) and tetrakis(trihydrocarbylalkoxy siloxide) of titanium having an oxidation number of 4, and tetraalkoxide is particularly suitably used.

Forms such as solutions of the simple body, alcohols and the like and dispersed micelles in hydrocarbon solvents are suitably used as water, and in addition thereto, moisture contained potentially in compounds which can discharge water in a reaction system such as water adsorbed on a surface of a solid matter, hydrated water of hydrates and the like can effectively be used if necessary.

Both components forming the condensation accelerating agent may be added separately to the reaction system or may be added in the form of a mixture by mixing them immediately before use, but it is not preferred to store the mixture over a long period of time since decomposition of the metal compound is brought about.

In respect to a use amount of the condensation accelerating agent, the mole ratios of the mole numbers of metal contained in the metal compound described above and water which is effective for the reaction based on the whole amount of the hydrocarbyloxysilyl groups present in the reaction system are preferably 0.1 or more for both components. The upper limits thereof are varied according to the purposes and the reaction conditions, and effective water having a mole ratio of about 0.5 to 3 based on the whole amount of the hydrocarbyloxysilyl groups bonded to the ends of the polymer at a stage before the condensation treatment is preferably present. A mole ratio of the metal contained in the metal compound described above to water which is effective for the reaction is varied according to the reaction conditions required, and it is suitably about 1/0.5 to 1/20.

Further, it is possible as well in the present invention to react the hydrocarbyloxysilane compound with the active end of the polymer, then add the condensation accelerating agent to accelerate reaction and thereafter further react them with the carboxylic acid ester compound of polyhydric alcohol described above.

In the present invention, publicly know antioxidants and short stop agents can be added, if desired, at a step after introducing the hydrocarbyloxysilane compound residue into the active end of the polymer in the above modification reaction.

After carrying out the modification treatment in the manner described above, publicly known after-treatments such as desolvent and the like are carried out, whereby the targeted modified polymer can be obtained. A polymer chain end-modified group of the above modified polymer can be analyzed by means of chromatography using a liquid as a carrier such as high performance liquid chromatography (HPLC), thin layer chromatography and the like and nuclear magnetic resonance spectroscopy (NMR).

A molecular weight distribution (Mw/Mn) of the polymer isolated before modifying the end-modified conjugated diene base polymer described above is 1.5 to 3.5, more preferably 1.5 to 2.6. A Mooney viscosity ($ML_{1+4}$, 100°C) thereof at 100°C is 10 to 150, more preferably 15 to 70.

A content of a cis-1,4 bond at a conjugated diene part on the principal chain is 75 mole % or more, more preferably 90 mole % or more. A content of a vinyl bond is preferably low, and it is preferably 1.5 mole % or less, more preferably 1.0

mole % or less. The monomer constituting the above conjugated diene base polymer preferably comprises substantially only 1,3-butadiene.

The polymer obtained after modified by using the modifying agent and the condensation accelerating agent each described above is provided with an excellent workability and enhanced in a fuel consumption property and a reinforcing property with a filler by controlling various characteristics of the conjugated diene base polymer described above before modified, and the rubber composition which maintains a DRY performance and which has an excellent on-ice performance at a very low temperature to a vicinity of 0°C can be obtained.

The rubber composition of the present invention has to have the independent air bubbles and comprise the natural rubber in addition to the modified conjugated diene base polymer as the rubber component (A), the fine particle-containing organic fiber (B) and the filler (C) as the essential requisites or components.

The rubber composition having the independent air bubbles described above is preferably used as a tread rubber having a foamed layer substantially brought into contact with a road surface. The foamed layer described above has a foaming rate falling in a range of 3 to 50 %, preferably 15 to 40 %.

The abrasion resistance and the DRY performance can be maintained by controlling the foaming rate to the range described above, and the excellent on-ice performance can be secured by ensuring a volume of a concave part in the tread.

The rubber component (A) comprises preferably 10 to 90 % by mass of the natural rubber and 90 to 10 % by mass of the modified conjugated diene base polymer (hereinafter referred to as the modified conjugated polybutadiene polymer) substantially comprising a polybutadiene homopolymer, more preferably 30 to 60 % by mass of the natural rubber and 40 to 70 % by mass of the modified conjugated polybutadiene polymer. Controlling the blending amounts of both components to the ranges described above makes the workability excellent and makes it possible to maintain the rapture characteristic, the abrasion resistance and the DRY performance and secure the excellent on-ice performance.

The rubber component used in combination with the above modified polymer includes a diene base synthetic rubber in addition to the natural rubber, and the diene base synthetic rubber includes, for example, styrene-butadiene copolymers (SBR), polybutadiene (BR), polyisoprene (IR), butyl rubber (IIR), ethylene-propylene copolymers and mixtures thereof. Also, a part thereof may assume a multifunctional structure, for example, it may be provided with a branched structure by using a modifying agent such as tin tetrachloride and silicon tetrachloride.

Further, the fine particle-containing organic fiber has to be contained as the component (B), and the component (B) and the fine particle-non-containing organic fiber (D) are used preferably in combination. If the component (B) described above which is added to the foamed layer of the rubber is used, an effect is exerted on removal of water and an increase in abrasion on the tire surface, and the on-ice performance is enhanced. Also, when a material having a relatively high hardness is used, as described above, for the fine particle used for the component (B), an influence is exerted on the surfaces of the vulcanized rubber and the molding in extrusion from relationship with a diameter of the organic fiber added, and a reduction in the workability in a plant is brought about due to the above cause. Accordingly, the fine particle-non-containing organic fiber (D) which does not contain fine particles is preferably added to the rubber layer in a prescribed proportion together with the component (B).

The above proportion of the component (D)/the component (B) falls in a range of preferably 98/2 to 2/98, particularly preferably 95/5 to 5/95 in terms of a mass ratio. Among them, an amount of the component (B) is preferably 0.02 to 20 parts by mass based on 100 parts by mass of the rubber component (A). It is more preferably 0.1 to 15 parts by mass.

In the present invention, a total amount of the component (D) and the component (B) which are added to the rubber layer is preferably 1 to 20 parts by mass, particularly preferably 1.5 to 15 parts by mass based on 100 parts by mass of the rubber component (A).

Improving the extrusion workability by controlling the total amount to the range described above removes the skin roughening and sufficiently provides the effect of blending the fibers. In the tread of the tire, generation of cracks is inhibited, and the edge effect or the spike effect and the on-ice effect corresponding to them are observed to be sufficiently enhanced.

Fibers which are correspondent and identical in a material, a shape, a diameter, a length and the like are not necessarily used simultaneously as the organic fiber used for the component (B) and the component (D), and organic fibers which are different from each other may be used. The organic fibers having the following properties are preferably used.

A material for the organic fiber used for the component (B) and the component (D) shall not specifically be restricted and can suitably be selected according to the purpose. As described above, however, resins constituting fibers having a viscosity characteristic which is lower than a viscosity of a rubber matrix in the rubber component (A) until a vulcanization maximum temperature is reached in vulcanization are preferably used in the present invention from the viewpoint of relation with the rubber component (A). That is, the resin constituting the organic fiber described above has preferably the heat characteristic that it is molten (including softened) until the rubber composition reaches a vulcanization maximum temperature.

If the resin constituting the organic fiber described above has the heat characteristic described above, the long air bubbles described above which can function as micro drainage grooves can readily be formed in the vulcanized

rubber obtained by vulcanizing the rubber composition.
The vulcanization maximum temperature means a maximum temperature reached by the rubber composition in vulcanization of the rubber composition. In the case of, for example, mold vulcanization, it means a maximum temperature reached by the rubber composition until the rubber composition is charged into a mold, discharged therefrom and cooled down. The vulcanization maximum temperature can be measured, for example, by inserting a thermo couple into the rubber composition. Also, a viscosity of the rubber matrix means a flow viscosity, and it is measured by means of, for example, a corn rheometer, a capillary rheometer and the like. A viscosity of the resin constituting the organic fiber described above means a melt viscosity, and it is measured by means of, for example, a corn rheometer, a capillary rheometer and the like.
Accordingly, the preferred resin selected in the present invention includes particularly suitably, for example, crystalline polymer resins having a melting point which is lower than the vulcanization maximum temperature described above.
The more the difference between a melting point of the crystalline polymer described above and a vulcanization maximum temperature of the rubber composition is increased, the more quickly the high polymer is molten during vulcanization of the rubber composition, and therefore a timing in which a viscosity of the high polymer is lower than a viscosity of the rubber matrix is expedited. Accordingly, when the polymer is molten, gases present in the rubber composition such as gases generated from the foaming agent blended in the rubber composition are put together in an inside of the high polymer having a lower viscosity than that of the rubber matrix. As a result thereof, independent air bubbles having a resin layer containing fine particles between the rubber matrices, that is, capsulated long air bubbles covered with the resin described above are efficiently formed in the vulcanized rubber in a state having no collapsed bubbles.
In the tire tread rubber having a foamed layer substantially brought into contact with a road surface, the above capsulated long air bubbles come out on the surface of the tread, and grooves produced by abrasion of the surface function as the micro discharge grooves described above to exert an edge effect and a spike effect as well as a water film removing effect.
In contrast with this, in a case where a melting point of the resin constituting the organic fiber is close to a vulcanization maximum temperature of the rubber composition, the resin is not quickly molten at an initial stage of the vulcanization and molten at an end stage of the vulcanization. At an end stage of the vulcanization, a part of gases present in the rubber composition is introduced into the vulcanized rubber matrix, and the gases are not put together in an inside of the molten resin. As a result thereof, long air bubbles which effectively function as the micro discharge grooves described above are not efficiently formed. On the other hand, in a case where a melting point of the resin in the organic fiber is too low, fusion between the organic fibers is caused in blending and kneading the organic fibers into the rubber composition to bring about inferior dispersion of the organic fibers. This also prevents the long air bubbles which can function as the micro discharge grooves from being efficiently formed. Accordingly, a melting point of the resin in the organic fiber is preferably selected in a range in which the above resin is not molten and softened at temperatures in the respective steps before the vulcanization and in which the viscosities of the rubber matrix and the resin are reversed during the vulcanization step.
An upper limit of a melting point of the resin constituting the organic fiber shall not specifically be restricted but is preferably selected considering the matter described above, and it is lower than a vulcanization maximum temperature of the rubber matrix described above, more preferably lower by 10°C or more and particularly preferably lower by 20°C or more. In general, an industrial vulcanization temperature of the rubber composition is about 190°C at the highest, and when the vulcanization maximum temperature is set, for example, in excess of 190°C, a melting point of the resin described above is selected in a range of 190°C or lower, preferably 180°C or lower and more preferably 170°C or lower. A melting point of the resin described above can be measured by means of a publicly known melting point measuring device, and a melt peak temperature measured by means of a DSC measuring device can be employed as the melting point described above.
From the viewpoints described above, the resin constituting the organic fiber may be formed from a crystalline polymer and/or an amorphous polymer. As described above, however, it is formed preferably in the present invention from an organic material containing a lot of a crystalline polymer and formed more preferably only from a crystalline polymer from the viewpoints that a change in the viscosity takes place rapidly at a certain temperature since phase transition is involved therein and that the viscosity is readily controlled.
The specific examples of the above crystalline polymer include, for example, single composition polymers such as polyethylene (PE), polypropylene (PP), polybutylene, polybutylene succinate, polyethylene succinate, syndiotactic 1,2-polybutadiene (SPB), polyvinyl alcohol (PVA), polyvinyl chloride (PVC) and the like, and polymers in which a melting point is controlled to a suitable range by copolymerization, blending and the like can be used as well. Further, those obtained by adding additives to the above resins can be used as well. They may be used alone or in combination of two or more kinds thereof. Among the above crystalline polymers, polyolefins and polyolefin copolymers are preferred, and polyethylene (PE) and polypropylene (PP) are more preferred since they are generally used and readily available. Polyethylene (PE) is particularly preferred since it has a relatively low melting point and is readily handled.
The amorphous polymer resin includes, for example, polymethyl methacrylate (PMMA), acrylonitrile-butadienestyrene

copolymers (ABS), polystyrene (PS), polyacrylonitrile, copolymers thereof, blends thereof and the like. They may be used alone or in combination of two or more kinds thereof.

The organic fiber of the component (B) and the component (D) used in the present invention is preferably short fibers having a fiber length falling in a range of 0.5 to 20 mm, particularly 1 to 10 mm.

If the organic fiber having the above fiber length is present in the vulcanized rubber in forming the foamed rubber layer described above, the edge effect and the spike effect effectively work, and addition of a foaming agent described later and the like makes it possible to sufficiently form the long air bubbles which can efficiently function as the micro drainage grooves.

In the organic fibers described above, a diameter of the fibers falls in a range of preferably 0.01 to 0.1 mm, particularly preferably 0.015 to 0.09 mm. Controlling a diameter of the organic fibers described above to 0.01 mm or more makes cutting less liable to be caused, and the diameter of 0.1 mm or less makes it possible to improve the workability.

In the component (B) used in the present invention, the fine particles contained in the organic fibers described above include inorganic fine particles and organic fine particles. To be specific, the inorganic fine particles include glass fine particles, aluminum hydroxide fine particles, alumina fine particles, iron fine particles and the like. The organic fine particles described above include, for example, (meth)acryl base resin fine particles, epoxy resin fine particles and the like. They may be used alone or in combination two or more kinds thereof. Among them, the inorganic fine particles are preferred in terms of having an excellent scratching effect on ice.

The fine particles used in the present invention have a Mohs hardness of preferably higher than 2, particularly preferably higher than 5. If the fine particles have a Mohs hardness which is not lower than a hardness (1 to 2) of ice, that is, 2 or more, the tread can be allowed to exert more scratching effect on a surface part of the foamed layer described above. This allows the tire obtained to be increased in a fraction coefficient between the tire and an ice road surface and excellent in an on-ice performance (face braking and driving performance on an ice road surface).

Such fine particles as having a high hardness include, for example, gypsum, calcite, fluorite, orthoclase, quartz, garnet and the like, and silica glass (hardness: 6.5), quartz (hardness: 7.0), fused alumina (hardness: 9.0) and the like each having a Mohs hardness of 5 or more can preferably be listed. Among them, silica glass, alumina (aluminum oxide) and the like are inexpensive and can readily be used.

In the fine particles described above, 80 % by mass or more, preferably 90 % by mass or more of a frequency count in a particle diameter distribution falls preferably in a range of 10 to 50 μm, and an average particle diameter thereof falls preferably in a range of 10 to 30 μm.

If the particle diameter in the frequency count described above is 10 μm or more, the particles are less liable to be coagulated between them in producing the component (B), and a dispersibility thereof tends to be improved. A tire prepared by using such fibers can display sufficiently a scratching effect, an edge effect and a spike effect. On the other hand, if the particle diameter described above is 50 μm or less, problems such as cutting of the fibers in producing the component (B) are prevented from being brought about frequently, and the desired component (B) is efficiently obtained.

In the fine particles described above, a frequency count in a peak value of a particle diameter distribution is preferably 20 % by mass or more, more preferably 25 % by mass or more and further preferably 30 % by mass or more. If the frequency count in the peak value of the particle diameter distribution is 20 % by mass or more, a particle diameter distribution of the particle diameters is sharpened, and the particle diameter is uniformized. Accordingly, the good fibers which are less liable to be cut in spinning the component (B) are obtained, and when such fibers are used for a tire, the on-ice performance is stabilized. In a size of the particle diameter falling in the range described above, the larger the particle diameter is, the more the tire is improved in an on-ice performance.

In this respect, the frequency count means a mass rate of the particles present in a sectional width based on the whole particle mass when a particle diameter in a particle size distribution (particle size distribution curve) is sectioned by a cut width of 2 μm, and the frequency count in the peak value means a frequency count in a cut width in which a maximum peak value is included in the cut width described above in the particle size distribution curve.

Further, the fine particle described above has preferably an aspect ratio of 1.1 or more, and corner parts are preferably present therein. It has an aspect ratio of more preferably 1.2 or more, further preferably 1.3 or more. In this regard, "corner parts are present" means that the whole surface is not a spherical surface or a smooth curved surface. Fine particles having corner parts from the beginning can be used as well for the fine particles in the present invention, but fine particles obtained by crushing spherical fine particles so that corner parts are present on a surface of the fine particles can be used as well, and more corner parts can be allowed to be present.

The form of the fine particles can be confirmed by observing the fine particles under an electron microscope, and it is confirmed that they are not spherical. Also, if an aspect ratio showing a ratio of a major axis to a minor axis of a particle is 1.1 or more, corner parts formed on the surface of the particle can sufficiently be angulated. This makes it possible to sufficiently enhance a scratching effect, an edge effect and a spike effect in a tire prepared by using the fine particle-containing organic fibers containing the above fine particles.

The fine particles described above are contained in a range of preferably 5 to 50 parts by mass, particularly preferably 7 to 50 parts by mass based on 100 parts by mass of the resin constituting the component (B).

A scratching effect in the rubber product of the rubber composition and an edge effect and a spike effect in the tread of the tire are sufficiently exerted by controlling an amount of the fine particle to the range described above, and the component (B) causing less problems such as cutting of the fibers in producing the component (B) can efficiently be obtained.
In the present invention, a foaming agent is blended into the vulcanized rubber before forming the foamed rubber layer described above in order to form air bubbles after vulcanization. Use of the foaming agent and the fibers described above provides the vulcanized rubber or the foamed rubber layer which is a tread with long air bubbles to form micro drainage grooves and imparts it with a water film-removing performance.

The foaming agent described above includes, for example, dinitrosopentamethylenetetramine (DPT), azodicarbonamide (ADCA), dinitrosopentastyrenetetramine, benzenesulfonyl hydrazide derivatives, oxybisbenzenesulfonyl hydrazide (OBSH), ammonium bicarbonate generating carbon dioxide, sodium bicarbonate, ammonium carbonate, nitrososulfonylazo compounds generating nitrogen, N,N'-dimethyl-N,N'-dinitrosophthalamide, toluenesulfonyl hydrazide, p-toluenesulfonyl semicarbazide, p,p'-oxy-bis(benzenesulfonyl semicarbazide) and the like.

Among the above foaming agents, dinitrosopentamethylenetetramine (DPT) and azodicarbonamide (ADCA) are preferred considering the production processability, and azodicarbonamide (ADCA) is particularly preferred. They may be used alone or in combination of two or more kinds thereof. The vulcanized rubber obtained above is a foamed rubber which is provided with a high foaming rate by the action of the foaming agent described above.

In the present invention, a foaming auxiliary agent is used as the other component from the viewpoint of carrying out efficient foaming, and it is preferably used in combination with the foaming agent described above. The foaming auxiliary agent described above includes, for example, auxiliary agents usually used for producing foamed products, such as urea, zinc stearate, zinc benzenesulfinate, zinc oxide and the like. Among them, urea, zinc stearate, zinc benzenesulfinate and the like are preferred. They may be used alone or in combination of two or more kinds thereof.
A content of the foaming agent described above may suitably be determined according to the purpose, and in general, it is preferably 1 to 10 parts by mass per 100 parts by mass of the rubber component. The foaming agent described above may be blended into the rubber matrix or may be blended into the organic fibers.

In the foamed rubber layer described above, the reinforcing filler (C) has to be further added. The reinforcing filler includes usually carbon black, silica and the like. Publicly known carbon blacks in which the ranges of an $I_2$ absorption, a CTAB specific surface area, a $N_2$ absorption, a DBP absorption and the like are suitably selected can be used as long as the rubber layer is enhanced in dynamic performances and improved in a processability. In respect to the kind of the carbon black, publicly known carbon blacks which are suitably selected such as SAF, ISAF-LS, HAF, HAF-HS and the like can be used. Considering the abrasion resistance, SAF having a fine particle diameter is preferred.
In the rubber layer described above, a content of the carbon black is 5 to 95 parts by mass, preferably 10 to 60 parts by mass per 100 parts by mass of the rubber component (A).
Controlling a content of the carbon black to the range described above makes it possible to maintain the abrasion resistance and provide the excellent WET performance.

In the foamed rubber layer described above, silica does not show only narrowly defined silicon dioxide and means silicic acid base fillers, and it includes, to be specific, silicic acid hydrate and silicic acid salts such as calcium silicate, aluminum silicate and the like in addition to silicic anhydride.
In the rubber layer described above, a content of silica is 5 to 95 parts by mass, preferably 15 to 80 parts by mass per 100 parts by mass of the rubber component (A). Controlling a content of the silica to the range described above and combining it with the modified diene base polymer described above make it possible to not only decrease a reduction in a hardness of the rubber composition caused by temperature change and maintain the DRY performance but also provide the excellent on-ice performance and the excellent WET performance.
A total blending amount of the carbon black and the silica in combination is preferably 40 to 80 parts by mass per 100 parts by mass of the rubber component (A), and a mixing ratio (carbon black/silica) of the carbon black to the silica is preferably 0.04 to 6.0 in terms of a mass ratio.

The rubber composition of the present invention further comprises preferably an inorganic compound powder (E) represented by the following Formula (IV) in which at least one average particle diameter is 50 $\mu$m or less:

$$M \cdot xSiO_2 \cdot yH_2O \qquad (IV)$$

wherein M is at least one oxide or hydroxide of metal selected from Al, Mg, Ti and Ca, and x and y each may be different and are an integer of 0 to 10. When both of x and y are 0, the inorganic compound powder (E) represented by Formula (IV) described above is at least one oxide or hydroxide of metal selected from Al, Mg, Ti and Ca.

The specific examples of the inorganic compound powder represented by Formula (IV) include alumina ($Al_2O_3$), magnesium hydroxide ($Mg(OH)_2$), magnesium oxide ($MgO_2$), titan white ($TiO_2$), titan black ($TiO_{2n-1}$), talc ($3MgO \cdot 4SiO_2 \cdot H_2O$), attapulgite ($SMgO \cdot 8SiO_2 \cdot 9H_2O$) and the like. Further, calcium magnesium silicate ($CaMgSiO_4$) and magnesium silicate ($MgSiO_3$) exert as well the same effects as those of the inorganic compound of the present invention.

The inorganic compound powder (E) represented by Formula (IV) described above is preferably an inorganic compound represented by the following Formula (V) or aluminum hydroxide:

$$Al_2O_3 \cdot mSiO_2 \cdot nH_2O \qquad (V)$$

m in Formula (II) is an integer of 1 to 4, and n is an integer of 0 to 4.
The specific examples of the inorganic compound powder (E) represented by Formula (V) described above include clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$) and the like. Also, aluminum hydroxide used in the present invention includes alumina hydrate.

The inorganic compound powder (E) described above has an average particle diameter of 50 μm or less, preferably 0.05 to 5 μm and more preferably 0.1 to 3 μm. Controlling an average particle diameter of the above inorganic compound powder to the range described above makes it possible to maintain an abrasion resistance which is a rapture resistant characteristic of the rubber for a tire tread. The particularly preferred inorganic compound powder (E) used in the present invention is clay ($Al_2O_3 \cdot 2SiO_2$), aluminum hydroxide ($Al(OH)_3$) and alumina ($Al_2O_3$). The inorganic compound powder (E) having the characteristics described above which is used in the present invention can be used alone or in a mixture of two or more kinds thereof. The inorganic compound powder (E) which does not satisfy the conditions described above, for example, those having other structures such as sulfides, sulfates and carbonates of metals selected from Al, Mg, Ti and Ca are not effective for enhancing the wet skid performance.

A content of the inorganic compound powder (E) having the characteristics described above which is used in the present invention is 5 to 50 parts by mass, preferably 5 to 20 parts by mass per 100 parts by mass of the rubber component described above. Controlling a content of the inorganic compound powder to the range described above makes it possible to enhance the WET performance and maintain the abrasion resistance.

Other components used in the present invention can be used as long as the effects of the present invention are not damaged, and capable of being suitably selected according to the purposes and used are, for example, vulcanizing agents such as sulfur and the like, vulcanization accelerating agents such as benzothiazyl disulfide and the like, vulcanization accelerating auxiliary agents, sulfurization inhibitors such as N-cyclohexyl-2-benzothiazyl-sulfenamide, N-oxydiethylene-benzothiazyl-sulfeneamide and the like, antiozonants, coloring agents, antistatic agents, dispersants, lubricants, antioxidants, softening agents, inorganic fillers such as carbon black, silica and the like and in addition thereto, various blending agents usually used in the rubber industry. They may be used alone or in combination of two or more kinds thereof.

The embodiment of the present invention and examples shall be explained below in details while referring to drawings.
Fig. 1 is a cross-sectional outline explanatory drawing for the tire according to the present invention. Fig. 2 (a) and (b) are the respective cross-sectional outline drawings along a circumferential direction and a width direction of a tread part in the tire according to the present invention. Fig. 3 is an explanatory drawing for explaining a principle in which the fine particle-containing organic fibers are oriented to a fixed direction.

The tire according to the present invention comprises a tire in which a foamed layer is provided on a surface substantially brought into contact with a road surface, to be specific, a pneumatic tire in which a foamed layer containing independent air bubbles is provided, as shown in Fig. 1 to Fig.3, on a surface substantially brought into contact with a road surface.
As shown in, for example, Fig. 1, it has a radial structure in which arranged in order are a pair of bead parts 1, a carcass 2 combined with a pair of the above bead parts 1 in the form of a toroid, a belt 3 fastening a crown part of the above carcass 2 and a tread 5 comprising two layers of a cap part 6 and a base part 7. The internal structure other than the tread 5 is not different from a structure of conventional radial tires, and therefore explanations thereof shall be omitted.

The surface part of the tread part 5 described above is a foamed rubber layer formed by vulcanizing the rubber composition according to the present invention. The tire 4 shall not specifically be restricted in a production process thereof, and it is vulcanized and molded, for example, by a prescribed mold under a prescribed temperature and a prescribed pressure. As a result thereof, obtained is the tire 4 comprising the cap part 6 formed by the foamed rubber layer according to the present invention formed by vulcanizing a non-vulcanized tread.

The tire 4 shall be explained in details with reference to Fig. 2. Fig. 2 (a) and (b) are the respective cross-sectional outline drawings along a circumferential direction and a width direction of a tread part in the tire according to the present invention.

In the tire 4, the cap part 6 is formed by the rubber composition of the present invention, and therefore spherical air bubbles 18 and long air bubbles 12 extending, as shown in Fig. 2 (a), to a circumferential direction (arrow A direction) of the tread part are present in a vulcanized rubber 6A. Concave parts 13 due to the long air bubbles 12 and concave parts 19 due to the spherical air bubbles 18 are formed on the surface of the cap part 6 by abrasion of a tread surface caused by running. In the above tire 4, the long air bubbles are scattered on the whole part of the vulcanized rubber 6A, and therefore even if the surface disappears by further abrasion, the high on-ice performance can be continued to be

maintained by the newly produced concave parts 13 and concave parts 19. In addition thereto, a protective layer 14 of the fine particle-containing organic fiber and fine particles 20 not only exert an abrasion resistance on the surface layer but also sufficiently display an edge effect and a spike effect, and therefore the on-ice performance is further enhanced.

In the embodiment described above, an example of the tread having a double layer structure was explained, but the structure of the tread shall not specifically be restricted and may be a single layer structure constituted by the rubber composition of the present invention. Further, it may be a multilayer structure in which the tread is divided in a radial direction or a structure in which the tread is divided in a circumferential direction or a width direction, and at least a part of a surface layer of the tread is constituted preferably from the rubber composition of the present invention.

The rubber composition described above in details is kneaded, warmed and extruded according to the following conditions and method in order to form a foamed rubber layer of the tire according to the present invention.

Kneading shall not specifically be restricted in various conditions of a kneading equipment such as a volume put into the kneading equipment, a rotating speed of a rotor, a kneading temperature, a kneading time and the like, and they can suitably be selected according to the purposes. Commercial equipments can suitably be used as the kneading equipment.

Warming or extruding shall not specifically be restricted in various conditions such as a warming or extruding time, a warming or extruding equipment and the like, and they can suitably be selected according to the purposes. Commercial equipments can suitably be used as the warming or extruding equipment. The warming or extruding temperature is suitably selected in a range in which foaming is not caused when the foaming agent is present. The extruding temperature is preferably about 90 to 110°C.

In the present invention, the organic fibers described above are oriented preferably to an extruding direction by extrusion and the like, and a fluidity of the rubber composition is controlled in a limited temperature range in order to carry out effectively the above orientation, to be specific, a plasticizer such as an aroma base oil, a naphthene base oil, a paraffin base oil, an ester base oil and the like and a workability improving agent such as liquid polymers including liquid polyisoprene rubber, liquid polybutadiene rubber and the like are suitably added to change a viscosity of the rubber composition and enhance a fluidity thereof.

When the organic fibers are added in the present invention, the fine particle-containing organic fiber (B) and the fine particle-non-containing organic fiber (D) are oriented preferably in a direction parallel to a surface brought into contact with a ground in the tread, that is, a circumferential direction of the tire in producing the foamed rubber layer of the tread. A draining property of the tire in a running direction can be enhanced, and the on-ice performance can effectively be improved.

In a method in which the respective organic fibers are oriented in line in the foamed rubber layer described above, a rubber composition 16 containing fine particle-containing organic fibers 15 is extruded, as shown in Fig. 3, from a cap 17 in which a cross-sectional area of a flow channel is reduced toward an outlet, whereby the fine particle-containing organic fibers 15 and the like can be oriented to a fixed direction. In the above case, the fine particle-containing organic fibers 15 and the like contained in the rubber composition 16 before extruded are gradually arranged in a longitudinal direction along an extruding direction (arrow p direction) in a process in which the rubber composition is extruded to the cap 17, and when it is extruded from the cap 17, the longitudinal direction thereof can almost completely be oriented to the extruding direction (arrow A direction in Fig. 2). A degree of the orientation of the fine particle-containing organic fibers 15 and the like contained in the rubber composition 16 in the above case is changed according to a degree of a reduction in a cross-sectional area of the flow channel, the extruding speed, a viscosity of the rubber composition 16 before vulcanized and the like.

In the present invention, the conditions of the vulcanization shall not specifically be restricted and can suitably be selected according to the kind of the rubber component. When a foamed rubber layer of a tread is produced as is the case with the present invention, mold vulcanization is preferred. The vulcanization temperature is preferably selected, as described above, so that a vulcanization maximum temperature of the rubber composition described above under vulcanization is higher than a melting point of the resin constituting the organic fiber described above. If the vulcanization maximum temperature is lower than a melting point of the resin, the fibers are not molten as described above, and gas produced by foaming can not be introduced into the resin. Long air bubbles can not efficiently be formed in the foamed layer. The vulcanizing device shall not specifically be restricted, and commercial devices can suitably be used.

In the tread (foamed rubber layer) of the tire of the present invention, a concave part attributable to a long air bubble produced on the surface of the tread is provided with a directional property. Accordingly, it functions as a drainage path which discharges water efficiently. The above concave part has the protective layer described above, particularly the protective layer in which fine particles are present, and therefore the above concave part is excellent in a peeling resistance, a channel form holding property, a channel edge part frictional property and a channel holding property in applying a load. Further, in the tire of the present invention, the long air bubbles are present in a whole part of the foamed rubber layer, and therefore various functions given by the concave part described above are exerted from an initial stage of use to an end stage thereof, so that the tire is excellent in an on-ice performance.

In the present invention, an average particle diameter (average of minor diameters of the long air bubbles 12

shown in Fig. 2 (b)) of the long air bubbles formed in the foamed rubber layer is preferably 10 to 500 μm. If the average particle diameter described above is 10 μm or more, a reduction in a water removing performance of the micro drainage grooves formed on the rubber surface can be prevented. If the average particle diameter is 500 μm or less, a cutting resistance and a block defect of the rubber can be prevented from being reduced, and an abrasion resistance of the rubber on a dry road surface can be prevented as well from being reduced.

The tire according to the present invention can suitably be applied not only to so-called passenger cars but also various vehicles such as trucks, buses and the like. It can suitably be used for structures in which slippage on an ice road surface has to be controlled, and the tread of the tire can be used, for example, for a tread for re-covering a retreaded tire, solid-core tires and the like as long as the slippage on an ice road surface described above has to be controlled. In a case of a pneumatic tire, not only air but also inert gases such as nitrogen and the like can be used as gas charged into an inside thereof.

In the embodiment described above, an example of the tread having a double layer structure was explained, but the structure of the tread shall not specifically be restricted and may be a single layer structure. Further, it may be a multilayer structure in which the tread is divided in a tire radial direction or a structure in which the tread is divided in a tire circumferential direction or a tread width direction, and at least a part of a surface layer of the tread is constituted preferably from the rubber composition of the present invention.

EXAMPLES

Next, the present invention shall be explained in further details with reference to examples, but the present invention shall by no means be restricted by these examples. Various measurements were carried out based on the following methods.

Production Example 1 of end-modified butadiene

<Preparation of catalyst>

A glass bottle having a volume of 100 ml which was equipped with a rubber stopper and which was dried and substituted with nitrogen was charged in the following order with a cyclohexane solution (15.2 % by weight) 7.11 g of butadiene, a cyclohexane solution (0.56M) 0.59 ml of neodymium neodecanoate, a toluene solution (3.23M in terms of an aluminum concentration) 10.32 ml of methylaluminoxane MAO (PMAO manufactured by Tosoh Akzo Corp.) and a hexane solution (0.90M) 7.77 ml of isobutylaluminum hydride (manufactured by Kanto Chemical Co., Inc.), and the mixture was ripened at room temperature for 2 minutes. Then, a hexane solution (0.95M) 1.45 ml of diethylaluminum chloride (manufactured by Kanto Chemical Co., Inc.) was added thereto, and the solution was ripened at room temperature for 15 minutes while occasionally stirring. A concentration of neodymium contained in the catalyst solution thus obtained was 0.011M (mole/liter).

<Production of polymer intermediate>

A glass bottle having a volume of about 900 ml which was equipped with a rubber stopper and which was dried and substituted with nitrogen was charged respectively with a cyclohexane solution of butadiene which was dried and refined and dried cyclohexane to obtain 400 g of a cyclohexane solution of butadiene 12.5 wt %. Next, 2.28 ml (0.025 mmol in terms of neodymium) of the catalyst solution prepared above was added thereto, and polymerization was carried out in a warm water bath of 50°C for 1.0 hour.

<Primary modifying treatment>

A hexane solution (1.0M) 23.5 millimole of 3-glycidoxypropyltrimethoxysilane (GPMOS) as a primary modifying agent was added to treat the solution at 50°C for 60 minutes.

<Secondary modifying treatment>

Subsequently, a hexane solution (1.0M) 23.5 millimole of N-(3-triethoxysilylpropyl)-4,5-dihydroimidazole (TEOSIPDI) (secondary modifying agent) was added thereto and stirred at 50°C for 30 minutes, and then 1.76 ml (corresponding to 70.5 eq/Nd) of a cyclohexane solution (1.01M) of tin bis(2-ethylhexanoate) and 32 μL (corresponding to 70.55 eq/Nd) of ion exchanged water were added to treat the solution in a warm water bath of 50°C for 1.0 hour. Then, 2 ml of an isopropanol 5 % solution of 2,2'-methylene-bis(4-ethyl-6-t-butylphenol) (NS-5) as an antioxidant was added to the polymerization system to terminate the reaction, and reprecipitation was carried out in isopropanol containing a

small amount of NS-5 to subject a precipitated substance to drum drying, whereby an end-modified polybutadiene rubber was obtained.
The polymer had a content of 94 mole % in a cis-1,4-bond, a vinyl content of 1.0 mole %, a molecular weight distribution Mw/Mn of 1.85 and a Mooney viscosity ($ML_{1+4}$, 100°C) of 48.

Examples 1 to 7 and Comparative Examples 1 to 5

Rubber compositions of the respective examples and comparative examples were produced by an ordinary method based on the respective blend contents shown in Table 1.
The vulcanization temperatures of the respective rubber compositions in vulcanization were measured by inserting a thermo couple into the rubber compositions. The vulcanization temperatures exceeded the melting points of the respective organic fiber resins until reaching the vulcanization maximum temperatures, and the viscosities of the resins described above were lowered than the viscosities of the rubber matrices in vulcanization of the rubber compositions. A viscosity (melt viscosity) of the respective organic fiber resins at the vulcanization maximum temperatures described above was measured (when a torque of the rubber reached Max, measurement was finished, and the torque was set as a rubber viscosity; and a change in the torque and a change in the foaming pressure were measured) by means of a corn rheometer to find that it was 6. On the other hand, in respect to a viscosity (flow viscosity) of the rubber composition described above at the vulcanization maximum temperature, a torque thereof was measured with the passage of time while changing the temperature by applying an input having a fixed amplitude of 100 cycles/minute by means of a corn rheometer of a model 1-C manufactured by Monsanto Company, and the minimum torque in the measurement was set as the viscosity (dome pressure: 0.59 MPa, holding pressure: 0.78 MPa, closing pressure: 0.78 MPa, oscillation angle: ±5°) to find that it was 11.
The respective rubber compositions obtained were used for a tread (foamed rubber layer) to produce radial tires for a test having a tire size of 185/70R15 for passenger cars by an ordinary method.

<Measurement of foaming rate>

A foaming rate Vs means a whole foaming rate in a tread, and it was calculated according to the following equation using samples (n = 10) obtained from the respective treads:

$$Vs = (\rho_0/\rho_1 - 1) \times 100\ (\%)$$

wherein $\rho_1$ represents a density (g/cm$^3$) of the vulcanized rubber (foamed rubber); and $\rho_0$ represents a density (g/cm$^3$) of a solid phase part in the vulcanized rubber (foamed rubber). In respect to a density of the rubber (foamed rubber) after vulcanized and a density of the solid phase part in the rubber (foamed rubber) after vulcanized, a mass thereof in ethanol and a mass in the air were measured, and the above densities were calculated from them. The evaluation results thereof are shown in Table 1.

Evaluation of tire performance:

<On-ice performance>

Four tires (tire size: 185/70R15) for test described above were mounted in a domestically produced passenger car of a 1600 cc class to confirm an on-ice braking performance thereof at an ice temperature of -1°C. The tire prepared in Comparative Example 1 was set as a control tire, and the on-ice performance was shown by (braking distance of the control tire)/(braking distance of the tire prepared in the other examples) × 100. The tire having a larger numerical value shows that it is more excellent in an on-ice performance. The evaluation results thereof are shown in Table 1.

<DRY performance>

A cornering performance and a braking and driving performance on an asphalt road surface in a test course were evaluated in terms of a comprehensive performance index based on a feeling of a professional test driver. In the above index, the value obtained in Comparative Example 1 was set to 100, and the higher numerical value shows that the DRY performance is better. The evaluation results thereof are shown in Table 1.

<Abrasion resistance>

After running 10,000 km on a paved road surface by an actual car, a depth of the remaining grooves was measured, and a running distance required for the tread to be abraded by 1 mm was relatively compared and shown by an index, wherein the value obtained in Comparative Example 1 was set to 100 (corresponding to 8000 km/mm). The larger index shows that the abrasion performance is better. The evaluation results thereof are shown in Table 1.

Table 1

| Composition (parts by mass) | Example | | | | | | | Comparative Example | | | | |
|---|---|---|---|---|---|---|---|---|---|---|---|---|
| | 1 | 2 | 3 | 4 | 5 | 6 | 7 | 1 | 2 | 3 | 4 | 5 |
| (A) Natural rubber | 70 | 50 | 50 | 20 | 50 | 50 | 50 | 100 | 95 | 50 | 50 | 50 |
| (A) Cis-1,4-polybutadiene rubber*1 | - | - | - | - | - | - | - | - | - | 50 | 50 | - |
| (A) Modified polybutadiene rubber*2 | 30 | 50 | 50 | 80 | 50 | 50 | 50 | - | 5 | - | - | 50 |
| (C) Carbon black*3 | 50 | 50 | 50 | 50 | 30 | 10 | 15 | 30 | 30 | 60 | - | 50 |
| (C) Silica*4 | 10 | 10 | 10 | 10 | 30 | 50 | 55 | 30 | 30 | - | 60 | 10 |
| Silane coupling agent*5 | 1.0 | 1.0 | 1.0 | 1.0 | 3.0 | 5.0 | 5.5 | 3.0 | 3.0 | - | 6.0 | 1.0 |
| Process oil | 15 | 15 | 15 | 15 | 15 | 15 | 15 | 15 | 15 | 15 | 15 | 15 |
| Stearic acid | 2 | 2 | 2 | 2 | 2 | 2 | 2 | 2 | 2 | 2 | 2 | 2 |
| Antioxidant*6 | 2.5 | 2.5 | 2.5 | 2.5 | 2.5 | 2.5 | 2.5 | 2.5 | 2.5 | 2.5 | 2.5 | 2.5 |
| Zinc oxide | 2 | 2 | 2 | 2 | 2 | 2 | 2 | 2 | 2 | 2 | 2 | 2 |
| Vulcanization accelerating agent*7 | 0.3 | 0.3 | 0.3 | 0.3 | 0.6 | 0.9 | 0.9 | 0.6 | 0.6 | 0.2 | 0.9 | 0.3 |
| Vulcanization accelerating agent*8 | 1.0 | 1.0 | 1.0 | 1.0 | 1.2 | 1.5 | 1.5 | 1.2 | 1.2 | 0.9 | 1.5 | 1.0 |
| Sulfur | 1.1 | 1.1 | 1.1 | 1.1 | 1.3 | 1.5 | 1.5 | 1.3 | 1.3 | 1.0 | 1.5 | 1.1 |
| Foaming agent*9 | 2.5 | 2.4 | 2.4 | 2.3 | 2.2 | 2.1 | 2.4 | 2.5 | 2.5 | 2.4 | 2.2 | 2.4 |
| Urea | 2.5 | 2.4 | 2.4 | 2.3 | 2.2 | 2.1 | 2.4 | 2.5 | 2.5 | 2.4 | 2.2 | 2.4 |
| (B) Fine particle-containing organic fiber*10 | 1.0 | 2.0 | 1.0 | 1.0 | 1.0 | 1.0 | 1.0 | 1.0 | - | 1.0 | 1.0 | - |
| (D) Organic fiber*11 | 1.0 | - | 1.0 | 1.0 | 1.0 | 1.0 | 1.0 | 1.0 | 1.0 | 1.0 | 1.0 | 1.0 |
| (E) Inorganic compound powder*12 | 10 | 10 | 10 | 10 | 10 | 10 | 10 | 10 | 10 | 10 | 10 | 10 |
| Tire performance | | | | | | | | | | | | |
| Foaming rate (%) | 25.1 | 25.6 | 25.1 | 25.3 | 24.8 | 25.0 | 25.2 | 25.5 | 25.2 | 24.8 | 25.3 | 24.7 |
| On-ice performance | 110 | 119 | 115 | 119 | 123 | 129 | 122 | 100 | 98 | 106 | 115 | 108 |
| DRY performance | 100 | 98 | 97 | 95 | 96 | 95 | 98 | 100 | 95 | 88 | 86 | 96 |

(continued)

| Composition (parts by mass) | Example | | | | | | | Comparative Example | | | | |
|---|---|---|---|---|---|---|---|---|---|---|---|---|
| | 1 | 2 | 3 | 4 | 5 | 6 | 7 | 1 | 2 | 3 | 4 | 5 |
| Abrasion resistance | 107 | 110 | 109 | 113 | 104 | 98 | 100 | 100 | 103 | 105 | 85 | 106 |

Remarks:
*1: Cis-1,4-polybutadiene rubber (trade name: UBEPOL 150L, manufactured by Ube Industries, Ltd.)
*2: End-modified polybutadiene polymer: obtained in Production Example 1
*3: Carbon black (N134 ($N_2SA$: 146 $m^2/g$) manufactured by Asahi Carbon Co., Ltd.)
*4: Silica (Nipsil AQ, manufactured by TOSOH SILICA CORPORATION)
*5: Silane coupling agent (Si69, manufactured by Degussa AG.)
*6: Antioxidant (N-isopropyl-N'-phenyl-p-phenylenediamine)
*7: Vulcanization accelerating agent (MBTS: dibenzothiazyl disulfide)
*8: Vulcanization accelerating agent (CBS: N-cyclohexyl-2-benzothiazolesulfeneamide)
*9: Foaming agent (DPT: dinitrosopentamethylenetetraamine)
*10: Fine particle-containing organic fiber: resin constituting the fiber (polyethylene; melting point: 132°C, fine particle content: 15 parts by mass, average particle diameter of fine particles: 20 μm, average diameter of fibers: 32 μm, average length of fibers: 2 mm).
*11: Fine particle-non-containing organic fiber: characteristic values of the resin constituting the fiber are the same as those of the fine particle-containing organic fiber
*12: Inorganic compound powder: aluminum hydroxide (Higilite H-43, manufactured by Showa Denko K.K.)

The following can be found from the results shown in Table 1.
In Examples 1 to 4 in which a large amount of carbon black is blended with silica, the DRY performance is maintained, and both of the abrasion resistance and the on-ice performance are improved to a large extent as compared with those in Comparative Example 1. Among them, in Example 4 in which a use proportion of the modified polybutadiene rubber in the rubber composition is high, both of the abrasion resistance and the on-ice performance are improved with a good balance.
It can be found that in Examples 5 to 7 in which an equivalent amount or a large amount of silica is blended with carbon black, the abrasion resistance and the DRY performance are maintained as compared with those in Comparative Example 1, and the on-ice performance is further improved as compared with those in Examples 1 to 4.
In respect to an effect of the presence of the component (B), as can be found from comparison of Example 3 with Comparative Example 5 in which the same amounts of the rubber components (A) and the filler (C) are added, both of the on-ice performance and the abrasion resistance are improved in Example 3.

INDUSTRIAL APPLICABILITY

The present invention can provide a rubber composition which enhances a reinforcing property with a filler and maintains a DRY performance and which has an excellent on-ice performance and a pneumatic tire prepared by using the above rubber composition for a tread. In particular, the above rubber composition can suitably be applied to tires for passenger cars.

## Claims

1. A rubber composition having independent air bubbles and comprising (A) a rubber component comprising a natural rubber and an end-modified conjugated diene base polymer, (B) a fine particle-containing organic fiber and (C) a filler.

2. The rubber composition according to claim 1, wherein the end-modified conjugated diene base polymer is obtained by polymerizing a conjugated diene base monomer comprising principally 1,3-butadiene and produced by a method comprising a step for reacting the active end of a conjugated diene base polymer having an active end in which a content of a cis-1,4-bond in a conjugated diene part of a principal chain is 75 mole % or more with a hydrocarbyloxysilane compound I represented by the following Formula (I) and/or a partial condensation product thereof:

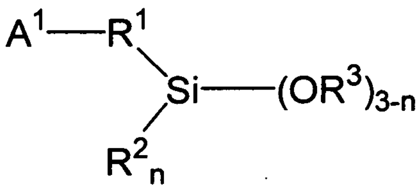

· · · (I)

(wherein $A^1$ is a monovalent group having at least one functional group selected from epoxy, thioepoxy, isocyanate, thioisocyanate, ketone, thioketone, aldehyde, thioaldehyde, imine, amide, trihydrocarbyl isocyanurate, carboxylic acid ester, thiocarboxylic acid ester, carboxylic anhydride, carboxylic halide and dihydrocarbyl carbonate; $R^1$ is a single bond or a divalent inactive hydrocarbon group; $R^2$ and $R^3$ each represent independently a monovalent aliphatic hydrocarbon group having 1 to 20 carbon atoms or a monovalent aromatic hydrocarbon group having 6 to 18 carbon atoms; n is an integer of 0 to 2; when a plurality of $OR^3$ is present, a plurality of $OR^3$ may be the same or different; and an active proton and an onium salt are not contained in a molecule).

**3.** The rubber composition according to claim 2, wherein the end-modified conjugated diene base polymer is produced by a method comprising a secondary modification step (a) in which a condensation accelerating agent is added to carry out condensation reaction of an introduced hydrocarbyloxysilane compound residue with the unreacted hydrocarbyloxysilane compound after the primary modification in which the hydrocarbyloxysilane compound I is reacted.

**4.** The rubber composition according to claim 2, wherein the end-modified conjugated diene base polymer is produced by a method comprising a step (b) for carrying out secondary modification in which the hydrocarbyloxysilane compound is further added and reacted under the presence of the condensation accelerating agent after the primary modification in which the hydrocarbyloxysilane compound I and/or the partial condensation product thereof are reacted.

**5.** The rubber composition according to claim 4, wherein the end-modified conjugated diene base polymer is produced by using at least one selected from the hydrocarbyloxysilane compound I represented by Formula (I) and/or the partial condensation product thereof, a hydrocarbyloxysilane compound II represented by the following Formula (II) and/or a partial condensation product thereof and a hydrocarbyloxysilane compound III represented by the following Formula (III) and/or a partial condensation product thereof as the hydrocarbyloxysilane compound used for the secondary modification step (b) described above:

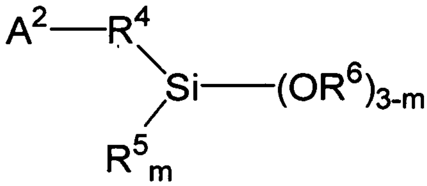

· · · (II)

(wherein $A^2$ is a monovalent group having at least one functional group selected from cyclic tertiary amine, non-cyclic tertiary amine, pyridine, sulfide, multisulfide and nitrile, an onium salt of cyclic tertiary amine, an onium salt of non-cyclic tertiary amine, a group having an allyl or benzyl Sn bond, sulfonyl, sulfinyl and nitrile; $R^4$ is a single bond or a divalent inactive hydrocarbon group; $R^5$ and $R^6$ each represent independently a monovalent aliphatic hydrocarbon group having 1 to 20 carbon atoms or a monovalent aromatic hydrocarbon group having 6 to 18 carbon atoms; m is an integer of 0 to 2; and when a plurality of $OR^6$ is present, a plurality of $OR^6$ may be the same or different):

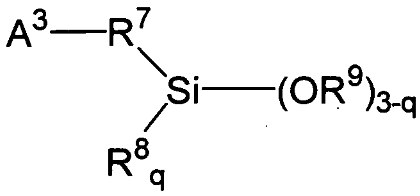

· · · (III)

(wherein $A^3$ represents alcohol, thiol, primary amine and an onium salt thereof, cyclic secondary amine and an onium salt thereof, non-cyclic secondary amine and an onium salt thereof; $R^7$ represents a single bond or a divalent inactive hydrocarbon group; $R^8$ and $R^9$ each represent independently a monovalent aliphatic hydrocarbon group having 1 to 20 carbon atoms or a monovalent aromatic hydrocarbon group having 6 to 18 carbon atoms; q is an integer of 0 to 2; and when a plurality of $OR^9$ is present, a plurality of $OR^9$ may be the same or different).

**6.** The rubber composition according to any of claims 1 to 5, wherein the end-modified conjugated diene base polymer is produced by using both of at least one selected from the group consisting of metal compounds represented by (1) to (3) described below and water as the condensation accelerating agent described above:

(1) a salt of carboxylic acid having 3 to 30 carbon atoms with tin having an oxidation number of 2:

$$Sn(OCOR^{10})_2$$

(wherein $R^{10}$ is an organic group having 2 to 19 carbon atoms, and when a plurality thereof is present, they may be the same or different),
(2) a compound of tin having an oxidation number of 4 which satisfies the following formula:

$$R^{11}{}_rSnA^4{}_tB^1{}_{(4-t-r)}$$

(wherein r is an integer of 1 to 3, and t is an integer of 1 or 2; t + r is an integer of 3 or 4; $R^{11}$ is an aliphatic hydrocarbon group having 1 to 30 carbon atoms; $B^1$ is a hydroxyl group or halogen; $A^4$ is a group selected from (a) a carboxyl group having 2 to 30 carbon atoms, (b) a α,γ-dionyl group having 5 to 30 carbon atoms, (c) a hydrocarbyloxy group having 3 to 30 carbon atoms and (d) a siloxy group which is totally tri-substituted (may be the same or different) with a hydrocarbyl group having 1 to 20 carbon atoms and/or a hydrocarbyloxy group having 1 to 20 carbon atoms, and when a plurality of $A^4$ is present, they may be the same or different) and
(3) a titanium compound having an oxidation number of 4 which satisfies the following formula:

$$A^5{}_xTiB^2{}_{(4-x)}$$

(wherein x is an integer of 2 or 4; $A^5$ is (e) a hydrocarbyloxy group having 3 to 30 carbon atoms or (f) a siloxy group which is totally tri-substituted with an alkyl group having 1 to 30 carbon atoms and/or a hydrocarbyloxy group having 1 to 20 carbon atoms, and when a plurality of $A^5$ is present, they may be the same or different; and $B^2$ is a α,γ-dionyl group having 5 to 30 carbon atoms).

**7.** The rubber composition according to any of claims 1 to 6, wherein the conjugated diene base polymer having an active end described above is produced by polymerizing a conjugated diene base monomer comprising principally 1,3-butadiene using a polymerization catalyst prepared by combining at least one compound selected from the respective factors of (i), (ii) and (iii) described below:

a component (i); a compound containing a rare earth element corresponding to an atomic number of 57 to 71 in the periodic table or a reaction product of the above compound with a Lewis base,
a component (ii); alumoxane and/or an organic aluminum
compound corresponding to $AlR^{12}R^{13}R^{14}$ (wherein $R^{12}$ and $R^{13}$ are the same or different and are a hydrocarbon group having 1 to 10 carbon atoms or a hydrogen atom, and $R^{14}$ is a hydrocarbon group having 1 to 10 carbon atoms, provided that $R^{14}$ may be the same as or different from $R^{12}$ or $R^{13}$) and
a component (iii); an organic compound containing a Lewis acid, a complex compound of metal halide and a Lewis base and active halogen.

8. The rubber composition according to any of claims 1 to 7, wherein the polymer isolated before modification of the end-modified conjugated diene base polymer has a molecular weight distribution (Mw/Mn) of 1.5 to 3.5, a Mooney viscosity ($ML_{1+4}$, 100°C) of 5 to 50 at 100°C and a cis-1,4-bond content of 75 mole % or more in a conjugated diene part of a principal chain; and a monomer constituting the above conjugated diene base polymer comprises substantially only 1,3-butadiene.

9. The rubber composition according to any of claims 1 to 8, wherein the rubber component (A) comprises 10 to 90 % by mass of the natural rubber and 90 to 10 % by mass of the end-modified conjugated diene base polymer.

10. The rubber composition according to any of claims 1 to 9, comprising 0.02 to 20 parts by mass of the fine particle-containing organic fiber (B) per 100 parts by mass of the rubber component (A).

11. The rubber composition according to any of claims 1 to 10, further comprising (D) a fine particle-non-containing organic fiber per 100 parts by mass of the rubber component (A).

12. The rubber composition according to claim 11, wherein a total amount of the fine particle-containing organic fiber (B) and the fine particle-non-containing organic fiber (D) is 1 to 20 parts by mass per 100 parts by mass of the rubber component (A).

13. The rubber composition according to claim 11 or 12, wherein a proportion (fine particle-containing organic fiber (B) /fine particle-non-containing organic fiber (D)) of the fine particle-containing organic fiber (B) to the fine particle-non-containing organic fiber (D) is 98/2 to 2/98 in terms of a mass ratio.

14. The rubber composition according to any of claims 1 to 13, wherein the fine particle-containing organic fiber (B) contains 5 to 90 parts by mass of the fine particles per 100 parts by mass of a material constituting the above organic fiber.

15. The rubber composition according to any of claims 1 to 14, wherein the fine particle-containing organic fiber (B) contains the fine particles which have a Mohs hardness of 2 or more and an average particle diameter of 10 to 30 μm and in which 80 % by mass or more of a frequency count in a particle diameter distribution is 10 to 50 μm.

16. The rubber composition according to any of claims 10 to 15, wherein the fiber used for the fine particle-containing organic fiber (B) and the fine particle-non-containing organic fiber (D) has a diameter of 0.01 to 0.1 mm and a length of 0.5 to 20 mm.

17. The rubber composition according to any of claims 1 to 16, wherein the fine particle of the fine particle-containing organic fiber (B) has a frequency count of 20 % by mass or more in a peak value of a particle diameter distribution.

18. The rubber composition according to any of claims 1 to 17, wherein the fine particle of the fine particle-containing organic fiber (B) has an aspect ratio of 1.1 or more, and corner parts are present therein.

19. The rubber composition according to any of claims 1 to 18, wherein the fine particle of the fine particle-containing organic fiber (B) is selected from an inorganic fine particle and an organic fine particle.

20. The rubber composition according to any of claims 1 to 19, wherein a material constituting the fine particle-containing organic fiber (B) and the fine particle-non-containing organic fiber (D) is a crystalline polymer comprising polyethylene and/or polypropylene and has a melting point of 190°C or lower.

21. The rubber composition according to any of claims 1 to 20, wherein the filler (C) comprises carbon black and/or silica.

22. The rubber composition according to claim 21, comprising 5 to 95 parts by mass of carbon black and 5 to 95 parts by mass of silica per 100 parts by mass of the rubber component (A).

23. The rubber composition according to any of claims 1 to 22, wherein a foaming rate of the rubber composition having the independent air bubbles is 3 to 50 %.

24. The rubber composition according to any of claims 1 to 23, further comprising (E) an inorganic compound powder having an average particle diameter of 50 μm or less which is represented by the following Formula (IV) in an amount

of 5 to 50 parts by mass per 100 parts by mass of the rubber component (A) :

$$M \cdot xSiO_2 \cdot yH_2O \qquad (IV)$$

(wherein M is at least one oxide or hydroxide of metal selected from Al, Mg, Ti and Ca, and both of x and y are an integer of 0 to 10).

**25.** The rubber composition according to claim 24, wherein the inorganic compound powder of the component (E) represented by Formula (IV) is an inorganic compound powder represented by the following Formula (V):

$$Al_2O_3 \cdot mSiO_2 \cdot nH_2O \qquad (V)$$

(wherein m is an integer of 1 to 4, and n is an integer of 0 to 4).

**26.** The rubber composition according to claim 24, wherein the inorganic compound powder represented by Formula (IV) is an aluminum hydroxide powder.

**27.** A pneumatic tire **characterized by** using the rubber composition according to any of claims 1 to 26 for a tread.

**28.** The pneumatic tire according to claim 27, wherein it is a radial tire for passenger cars.

Fig.1

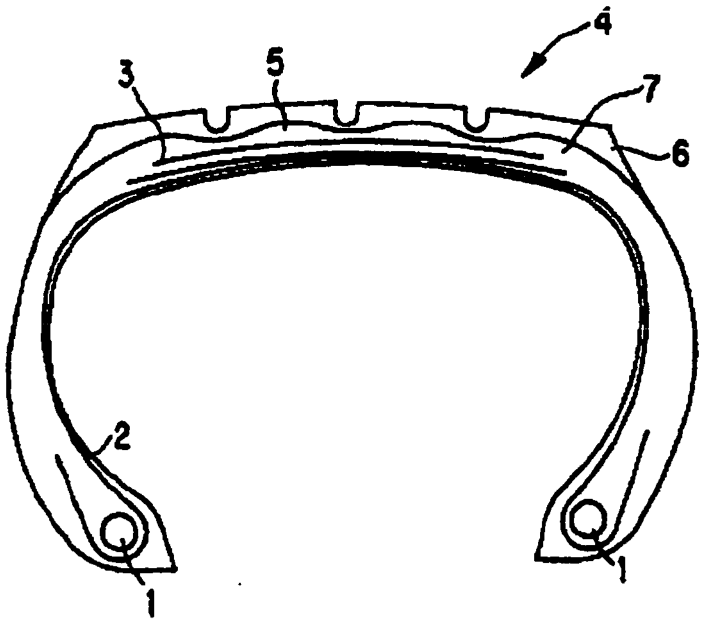

Fig.2

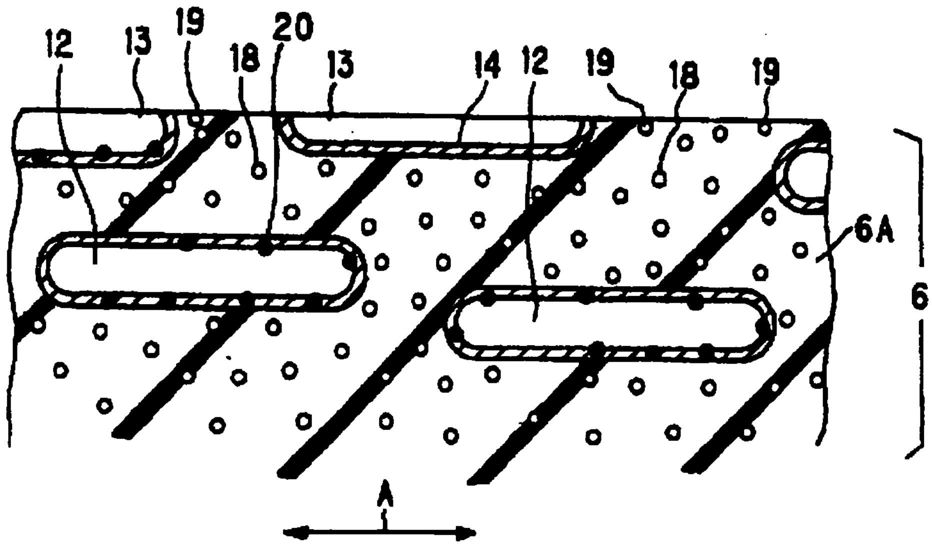


(a)

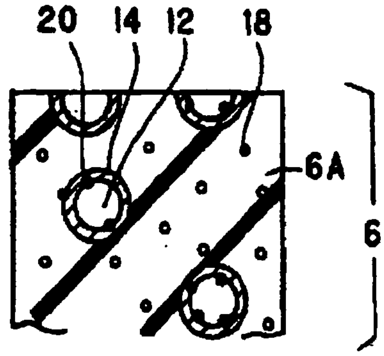


(b)

Fig.3

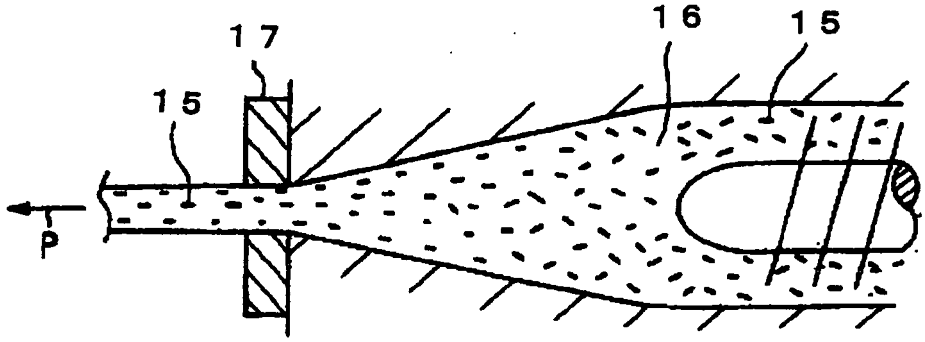

**INTERNATIONAL SEARCH REPORT**

International application No.
PCT/JP2007/063608

A. CLASSIFICATION OF SUBJECT MATTER
*C08L7/00*(2006.01)i, *B60C1/00*(2006.01)i, *C08F8/42*(2006.01)i, *C08J9/06*(2006.01)i, *C08K7/02*(2006.01)i, *C08K7/16*(2006.01)i, *C08L15/00*(2006.01)i

According to International Patent Classification (IPC) or to both national classification and IPC

B. FIELDS SEARCHED

Minimum documentation searched (classification system followed by classification symbols)
C08L7/00-25/00, B60C1/00, C08F8/42, C08J9/06, C08K7/02, C08K7/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2004-238619 A (Bridgestone Corp.), 26 August, 2004 (26.08.04), Claims; Par. Nos. [0111], [0123]; examples (Family: none) | 1-13,21-23, 27,28<br>14-20,24-26 |
| Y | JP 2005-041924 A (Bridgestone Corp.), 17 February, 2005 (17.02.05), Claims (Family: none) | 14-20 |
| Y | JP 2003-201371 A (Bridgestone Corp.), 18 July, 2003 (18.07.03), Claims | 14-20 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 September, 2007 (01.09.07) | 18 September, 2007 (18.09.07) |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2007/063608

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-233993 A (Bridgestone Corp.), 28 August, 2001 (28.08.01), Claims (Family: none) | 14-20 |
| Y | WO 03/046020 A1 (Bridgestone Corp.), 05 June, 2003 (05.06.03), Claims; page 20, line 7 to page 21, line 3 | 24-26 |
| Y | WO 03/087171 A1 (Bridgestone Corp.), 23 October, 2003 (23.10.03), Claims; page 24, line 5 to page 25, line 14 | 24-26 |

Form PCT/ISA/210 (continuation of second sheet) (April 2005)

**INTERNATIONAL SEARCH REPORT**
Information on patent family members

International application No.
PCT/JP2007/063608

| | | | |
|---|---|---|---|
| JP 2003-201371 A | 2003.07.18 | WO 03/037979 A1 | 2003.05.08 |
| WO 03/046020 A1 | 2003.06.05 | US 2005-70672 A1<br>EP 1449857 A1 | 2005.03.31<br>2004.08.25 |
| WO 03/087171 A1 | 2003.10.23 | US 2005-159554 A1<br>EP 1505087 A1 | 2005.07.21<br>2005.02.09 |

Form PCT/ISA/210 (patent family annex) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003201371 A
- JP 2001233993 A
- WO 0202356 A
- WO 03046020 A